# EUROPÄISCHE PATENTSCHRIFT

(11) **EP 1 041 693 B1**
(45) Veröffentlichungstag und Bekanntmachung des Hinweises auf die Patenterteilung: **18.09.2002**
(21) Anmeldenummer: 00106700.8
(22) Anmeldetag: 29.03.2000
(51) Int. Cl.: H02G 3/14, G09F 27/00

(54) **Elektrische Vorrichtung, wie Schalter oder Steckdose**
Electric device such as switch or outlet
Appareil électrique tel que prise ou interrupteur

(30) Priorität: 01.04.1999 DE 29906037 U; 24.02.2000 DE 20003346 U
(43) Veröffentlichungstag der Anmeldung: 04.10.2000
(73) Patentinhaber: Benkhardt, Axel, 22587 Hamburg (DE)
(72) Erfinder: Benkhardt, Axel, 22587 Hamburg (DE)
(74) Vertreter: Richter, Werdermann & Gerbaulet

(56) Entgegenhaltungen:
- EP-A- 0 939 390
- DE-U- 29 803 310
- FR-A- 2 658 027
- GB-A- 2 211 997
- US-A- 5 099 087

## Beschreibung

Die Erfindung betrifft eine elektrische Vorrichtung, wie Schalter, Steckdose gemäß dem Oberbegriff des Anspruches 1.

Schalter und Steckdosen in einfacher oder mehrfacher Anordnung zum Einbau in Unterputzdosen oder in Aufputzdosen sind in den verschiedensten Ausführungsformen bekannt. Allen diesen Ausführungsformen ist gemeinsam, daß die Schalter und Steckdosen gegenüber ihrem Gehäuse, das die elektrischen Bauelemente aufnimmt, mit einer Abdeckplatte abgedeckt sind, die eine quadratische, rechteckige, ovale oder kreisrunde Form aufweisen. Diese meist aus Kunststoffen oder metallischen Werkstoffen bestehende Abdeckplatten sind, wenn diese aus Kunststoffen bestehen, uni oder farbig gestaltet. Auch z. B. mehrere Steckdosen aufnehmende sogenannte "Steckdosenleisten", u.a. auch mit einem Ein- und Ausschalter versehen, oder Steckdosen für fernbedienbare Elektrogeräte, sind in einem quadratischen oder rechteckförmigen Gehäuse untergebracht.

So ist durch die GB-A-2211997 eine ein farbiges Motiv aufweisende Abdeckplatte für das Gehäuse eines Lichtschalters bekannt, die keine Oberflächenprofilausgestaltung oder eine Oberfläche mit einer strukturellen, plastischen Formgebung aufweist. Das Motiv, wie z. B. ein Apfel, ist als plattenförmige Fläche mit den Umrisslinien des Motivs wiedergegeben, und auf dieser Fläche ist in farblicher Ausgestaltung das Motiv selbst wiedergegeben. Das Motiv ist nur durch Konturenverlauf und der farbigen Motivwiedergabe erkennbar wiedergegeben. Eine die Eigensteifigkeit der Abdeckplatte erzeugende Plattenprofilierung mit Einbeziehung des Motivs ist nicht vorgesehen.

Eine Abdeckplatte für Lichtschalter oder Steckdosen beschreibt die US-A-5 099 087. Hier ist die Abdeckplatte mit einem in ihrem oberen Bereich auf die Abdeckplatte aufsteckbaren ein Motiv in plastischer Wiedergabe aufweisenden Profilkörper versehen, wobei als plastisches Motiv z. B. ein Katzen- oder Entenarrangement gewählt ist. Die Abdeckplatte selbst ist nicht als plastisches Motiv strukturiert, sondern hat ausschließlich gehäuseabdeckende Funktionen und dient nur als Träger für aufsteckbare, ein plastisches Motiv aufweisenden Formkörper.

Beide Abdeckplatten haben gemeinsam, vorgegebene Gehäuseabdekkungen mit einem zusätzlichen Design, z. B. in Form eines Motivs zu versehen, ohne dabei die Gehäuseabdeckungen selbst zu strukturieren oder zu einem Motiv zu formen.

Aufgabe der vorliegenden Erfindung ist es, elektrische Vorrichtungen der eingangs genannten Art werbewirksam auszubilden, die den Benutzer blickfangmäßig, optisch und/oder akustisch ansprechen, wobei gleichzeitig die Gehäuse der elektrischen Vorrichtungen eine hohe Eigenstabilität bei geringer Wandstärke erhalten sollen.

Diese Aufgabe wird durch die in dem Anspruch 1 angegebenen Merkmale gelöst.

Hiernach besteht die Erfindung darin, daß die Gehäuseabdeckplatten derartiger elektrischer Vorrichtungen mit mindestens einem Schalter oder mindestens einer Steckdose bei geringer Wandstärke eine zweidimensionale und plastische oder anderweitige geometrische und strukturelle Ausgestaltung bzw. Formgebung in Form eines Motivs, Logos oder Zahl und/oder eine figürliche Ausgestaltung bzw. Formgebung, wie Blume, Tierform, Herzform, Form eines Gesichts oder einer Persönlichkeit aufweisen, wobei die strukturelle Ausgestaltung bzw. Formgebung zur Erhöhung der Eigenstabilität unterschiedliche Oberflächenprofilierungen mit erhabenen Profilabschnitten und vertieften Profilabschnitten und Profilstegen aufweist, so dass sich die unterschiedlichen Profilabschnitte zu einem dünnwandigen Formkörper mit motivartiger stabilisierender Struktur ergänzen und wobei der umlaufende Rand des Schalters oder der Steckdose oder der Gehäuseabdeckplatten als motivlose oder motivartige wandverstärkende Profilkörper ausgebildet sind. Die figürliche strukturelle Formgestaltung oder der Formkörper ist fest oder lösbar integrierter Bestandteil des Schalters und/oder der Steckdose bzw. deren Gehäuseabdeckplatten, wobei bei der lösbaren Ausführungsform die strukturelle Formgestaltung bzw. ein entsprechender Formkörper auf die Steckdose und/oder den Schalter aufgesteckt, übergestülpt, aufgeklebt oder aufgeklemmt ist.

Neben verschiedenen farbigen, durchsichtigen oder selbstleuchtenden Ausgestaltungen, aus den verschiedensten Materialien sind die Gehäuseabdeckplatten und/oder Schalter oder Steckdosen zweidimensional oder dreidimensional ausgebildet, so daß in letzterem Fall eine plastische Gestaltung der Motive, Logos od. dgl. gegeben ist. Jede plastische Ausgestaltung ist möglich. Darüber hinaus können die Gehäuseabdeckplatten oder Schalter oder Steckdosen außenwandseitig mit Werbeaufschriften versehen sein.

Steckdosen und Lichtschalter mit Abdeckplatten können als Einfachsteckdose, Doppelsteckdose oder mit mehreren Steckdosen und auch Lichtmit einem Schalter oder mehreren Schaltern ausgebildet sein, wobei dann die Abdeckplatten der Dosen- und Schaltergehäuse jede Art von Form, Logo, Zahl, Motiv od. dgl. aufweisen können, wobei neben einer viereckigen Ausgestaltung auch jede andere geometrische Form die Abdeckplatten haben können. Im Design können die Abdeckplatten auch dem Design der Wohnungseinrichtung angepaßt sein. Jedoch auch die Gehäuse von Steckdosenleisten können plastisch ausgebildet sein, z.B. können die Gehäuse eine Schlangenform oder eine andere Gestaltung aufweisen. Ebenso kann das Aufputzgehäuse einer Steckdose oder eines Schalters die Form einer Flasche oder jede Art von Form, Motiv, Logo oder Zahl aufweisen. Die Abdeckplatte oder nur ihr umlaufender Rand oder nur ein Teil des Randes kann aus jedem Material und Farbe bestehen. Auch aus opaken oder glasklarem Material, wie Glas oder Kunststoff, kann die Abdeckplatte oder das Aufputzgehäuse einer Steckdose oder eines Schalters bestehen. Außerdem kann der Außenrand oder die Abdeckplatte in ihrer vollen Fläche jede Größe, Dichte, Form od. dgl. aufweisen; auch Werbeschriftzüge, Logos, Zahl oder Zahlen, Buchstaben oder eine besondere grafische Ausgestaltung kann auf die Abdeckplatte aufgebracht sein. Auch ein nachträgliches Umrüsten von Abdeckplatten von Schaltern und Steckdosen ist jeder Zeit möglich.

Vorteilhafte Ausgestaltungen der Erfindung sind in den Unteransprüchen gekennzeichnet.

So ist nach einer weiteren Ausgestaltungsform die Gehäuseabdeckplatte mit einem plattenförmigen oder folienförmigen Träger mit einem programmierbaren, vorprogrammierten oder besprechbaren Sprach- und/oder Musikmodul mit einer Stromquelle und mit einem mechanischen, licht-optisch- oder druckgesteuerten Ein- und Ausschalter oder Sensor versehen, das mittels des Träger an einer Wandfläche der Gehäuseabdeckplatte oder Schalter oder Steckdosen angeordnet oder in die Gehäuseabdeckplatte integriert ist, wobei die Anordnung des Sprach- und/oder Musikmoduls derart ist, daß über die mechanische, licht-optische oder druckbeauflagte vermittels Betätigung oder Bewegung ausgelöste Steuerung die In- und Außerbetriebnahme des Sprach- und/oder Musikmoduls durch Wiedergabe der Sprach- und/oder Musikaufzeichnung ausgelöst wird. Auch ein Microcomputer oder -prozessor ist einsetzbar, der die Sprach und/oder die Beleuchtung steuert.

Des weiteren ist die Gehäuseabdeckplatte mit einer Anzahl von mit einer Stromzufuhr verbundenen Leuchten oder Leuchtdioden und/oder einem mechanischen, licht-optisch- oder druckgesteuerten Ein- und Ausschalter oder Sensor versehen, wobei die Leuchten oder Leuchtdioden über die Fläche der Gehäuseabdeckplatte verteilt an dieser oder auf dieser oder in Form eines umlaufenden Lauflichtes aus einer Anzahl von Leuchten oder Leuchtdioden am Umfang der Gehäuseabdeckplatte angeordnet sind. Auch besteht die Möglichkeit, nur eine Leuchte oder Leuchtdiode in der Gehäuseabdeckplatte oder Schalter oder Steckdose anzuordnen.

Nach einer anderen Ausgestaltung ist die Gehäuseabdeckplatte mit einem plattenförmigen oder folienförmigen Träger mit einem programmierbaren, vorprogrammierten oder besprechbaren Sprach- und/oder Musikmodul mit einer Stromquelle und mit einem mechanischen, licht-optisch- oder druckgesteuerten Ein- und Ausschlater oder Sensor versehen, das mittels des Trägers an der Wandfläche der Gehäuseabdeckplatte angeordnet oder in die Gehäuseabdeckplatte integriert ist, wobei die Anordnung des Sprachund/oder Musikmoduls derart ist, daß über die mechanische, licht-optische- oder druckbeaufschlagte vermittels Betätigung oder Bewegung ausgelöste Steuerung die In- und Außerbetriebnahme des Sprach- und/oder Musikmoduls durch Wiedergabe der Sprach- und/oder Musikaufzeichnung ausgelöst wird, und wobei die Gehäuseabdeckplatte des weiteren mit einer Anzahl von mit einer Stromzufuhr verbundenen Leuchten oder Leuchtdioden und mit einem mechanischen, lich-optisch- oder druckgesteuerten Ein- und Ausschalter oder Sensor versehen ist, wobei die Leuchten oder Leuchtdioden über die Fläche der Gehäuseabdeckplatte verteilt an dieser oder auf dieser in Form eines umlaufenden Lauflichtes aus einer Anzahl von Leuchten oder Leuchtdioden am Umfang der Gehäuseabdeckplatte angeordnet sind.

Durch die erfindunsgemäße Ausgestaltung der Abdeckplatten von Gehäusen mit Steckdosen oder Lichtschaltern erhalten die Abdeckplatten eine blickfangmäßige Ausgestaltung mit der Möglichkeit auch gleichzeitig werbewirksam zu sein. Des weiteren ist eine Anpassung an ein Wohnungs- oder Büro-Designs möglich. Sowohl im Wohnbereich als auch im Geschäftsbereich lassen sich der Erfindungsgegenstand einsetzen. Durch die Anordnung eines Sprach- und/oder Musikmoduls an oder in einer Gehäuseabdeckplatte ist die Möglichkeit gegeben, mit vorprogrammierten, z.B. warenbezogenen Textes / Spots oder Warn-Sicherheits-Hinweise bzw. alle Hinweise, die auf Schildern vorkommen, u. dgl. den Steckdosenoder Lichtschalterbenutzer anzusprechen. Durch den akustisch ausgesandten Text wird der Benutzer der elektrischen Vorrichtung akustisch angesprochen. Dadurch ist eine hohe Werbewirksamkeit gegeben, da er sich dem Sprachzustrom nicht entziehen kann; jedoch auch Texte anderer Art können über eine derart gestaltete oder ausgebildete Gehäuseabdeckplatte vermittelt werden.

Dieses Art des Einsatzes eines Sprach- und/oder Musikmoduls bei einer Gehäuseabdeckplatte kann als Werbe-, Reklame- oder als Hinweisträger eingesetzt werden, wobei auch die Gehäuseabdeckplatte zusätzlich mit werbewirksamen Hinweisen oder Reklame versehen sein kann.

Die Steuerung des Sprach- und/oder Musikmoduls kann dabei über mechanische, licht-optische oder auf druckansprechende Einrichtungen oder Sensoren (Schall oder Infrarot) erfolgen, die z.B. bei Benutzung des Lichtschalters oder der Steckdose in Betrieb gesetzt werden, wobei über ein Zeitschaltwerk nach einer vorgegebenen Zeit die Ton- oder Sprachwiedergabe eingestellt wird. Auch Microcomputer oder -prozessoren sind zur Steuerung einsetzbar.

Optisch wird der Benutzer der Steckdose oder des Lichtschalters durch die Anordnung von Leuchten oder Leuchtdioden oder von einem umlaufenden Lauflicht angesprochen. Auch hier erfolgt die Steuerung der Leuchtmittel bei Berühren oder Druckeinwirkung oder Vorbeigehen an der so ausgebildeten Gehäuseabdeckplatte und zwar über einen Ein- und Ausschalter der mechanisch, licht-optisch- oder druckgesteuert sein kann, wobei auch Sensoren (Schall oder Infrarot) oder jedwede Steuereinrichtung Verwendung finden können. Die Stromzufuhr zu den Leuchtmitteln kann entweder extern erfolgen, auch drahtlos oder über eine in die Gehäuseabdeckplatte mit integrierte Batterie. Bei Lichtschaltern kann die Steuerung über den Schalter beim Ein- und Ausschalten erfolgen.

Der Vorteil der Kombination eines Sprach- und/oder Musikmoduls mit Leuchtmitteln erbringt einen weiteren Vorteil insofern, als der Benutzer der Steckdose oder des Lichtschalters sowohl akustisch als auch optisch angesprochen wird.

Das in der Gehäuseabdeckplatte vorgesehene Sprachmodul und/oder Musikmodul kann sich auf Reklame oder anderweitige Werbehinweise beziehen, jedoch auch andere Wiedergaben sind möglich. Neben Werbeund Reklamehinweisen besteht auch die Möglichkeit, das Sprachmodul oder das Musikmodul mit Werbeslogan vorzuprogrammieren. Des weiteren kann das Sprach- und/oder Musikmodul und auch die Steuerung der Leuchtmittel mit einer Intervallschaltung für eine Unterbrechung der Wiedergaben und Wiederholvorgänge in Verbindung gebracht werden.

Die neue Formen der Steckdosen/Schalter/Abdeckplatten können auch mit jeder Art von (Kinder-)sicherungen unter dem Gesichtspunkt der Sicherheit versehen sein, so kann z.B. eine plastisch ausgestellte Schweinskopf-Steckdose im Kopf des Schweines mit einem sog. Drehknopf (der auch einrastet) versehen sein, um mit Hilfe dieses Drehknopfes die Steckdosenlöcher zu verdecken. Auch eine Kombination einer neuen Abdeckplattenform und einer neuen Schalterform ist möglich. So ist z.B. der Schalter als eine runde Nase ausgebildet, die auch leuchten kann, wenn der Schalter betätigt wird und die neue Abdeckplatte fungiert als Gesicht.

Die figürliche Ausgestaltung der Steckdosen oder Schalter oder Abdeckplatten besteht in der formgebenden Wiedergabe z.B. einer Blume, eines Tieres oder eines Tierkopfes, der Form eines Gesichtes oder einer Persönlichkeit, wobei aufgrund der unterschiedlichen strukturellen Abschnitte des Motives sich Abschnittsverstärkungen ergeben, die unterstützt werden durch erhabene und vertiefende Oberflächenprofilierungen, so daß ein in sich stabiles Formgebilde erhalten wird, was dazu führt, daß auch dünnwandiges Material eingesetzt werden kann, ohne daß dabei die Eigenstabilität verringert wird.

Vorteilhafte Ausgestaltungen der Erfindung sind in den Unteransprüchen gekennzeichnet.

Ausführungsbeispiele der Erfindung werden nachstehend anhand der Zeichnungen näher erläutert. Es zeigen:
- Fig. 1: in einer Ansicht von oben einen Kippschalter mit einer Abdeckplatte, wobei der Kippschalter und die Abdeckplatte in Herzform ausgebildet sind,
- Fig. 2: in einer Ansicht von oben einen Kippschalter mit einer Abdeckplatte in Blumenform,
- Fig. 3: in einer Ansicht von oben eine Steckdose mit einer Abdeckplatte in Form eines Tierkopfes,
- Fig. 4: in einer Ansicht von oben eine Kombination aus zwei Kippschaltern und einer Steckdose und mit einer Abdeckplatte in Flaschenform,
- Fig. 5: in einer Ansicht von oben eine Doppel-Steckdose mit einer Abdeckplatte in Form eines stilisierten Fahrzeuges,
- Fig. 6: in einer Ansicht von oben einen Kippschalter mit einer mehrere Leuchten aufnehmenden Abdeckplatte,
- Fig. 7: in einer schaubildlichen Ansicht eine Steckdosenleiste mit einem Gehäuse in Schlagenform,
- Fig. 8: in einer schaubildlichen Ansicht eine Gehäuseabdeckplatte für einen Kippschalter oder eine Steckdose mit einem Sprach- und/oder Musikmodul,
- Fig. 9: in einer schaubildlichen Ansicht ein plattenförmiges Träger-element mit an seiner Seitenwandfläche angeordnetem Sprach- und/oder Musikmodul mit eingebautem Sensor und Ein- und Ausschalter,
- Fig. 10: in einer schaubildlichen Ansicht von oben das Gehäuse des Sprach- und/oder Musikmoduls,
- Fig. 11: in einer schaubildlichen Ansicht die Unterseite des Gehäuses des Sprach- und/oder Musikmoduls,
- Fig. 12: in einer schaubildlichen Ansicht eine Gehäuseabdeckplatte für einen Kippschalter oder eine Steckdose mit an dieser angeordneten Leuchtmittel,
- Fig. 13: in einer schaubildlichen Ansicht eine Gehäuseabdeckplatte für einen Kippschalter oder eine Steckdose mit einem umlaufend angeordneten Lauflicht,
- Fig. 14: in einer schaubildlichen Ansicht eine Gehäuseabdeckplatte für einen Kippschalter oder eine Steckdose mit einem tierkopfartigen Element,
- Fig. 15: eine Schaltung für einen laufenden Pfeil,
- Fig. 16: eine Schaltung für ein Lauflicht,
- Fig. 17: eine schematische Darstellung einer weiteren Ausführungsform mit einem Mikroprozessor,
- Fig. 18: in einer schaubildlichen Ansicht eine Steckdose mit einer figürlichen Formgebung der die Steckdose umrahmenden äußeren Abdeckplatte in Form zweier zueinander gekehrten personifizierter Köpfe,
- Fig. 19: die Steckdose gemäß Fig. 18 in einer Ansicht von vorn,
- Fig. 20: in einer schaubildlichen Ansicht eine Steckdose mit einem vorderen, sechseckigen Rahmen und aufgesetztem Figur-element in Form einer Biene,
- Fig. 21: in einer Ansicht von vorn zwei mit ihren sechseckig ausgebildeten vorderen Rahmen aneinander gesetzten Steckdosen und einem beide Rahmen miteinander verbindenden Formelement in Form einer Biene,
- Fig. 22: in einer Ansicht von vorn eine Steckdose mit blumenornamentaler Randausgestaltung,
- Fig. 23: in einer schaubildlichen Ansicht eine Steckdose mit einer blumenomamentalen Randausgestaltung und mit einem scheibenförmig ausgebildeten Drehschalter mit einer figürlichen Formgestaltung,
- Fig. 24: in einer schaubildlichen Ausgestaltung eine Steckdose mit einem Schalter, wobei beide Elemente eine figürliche Ausgestaltung aufweisen,
- Fig. 25: die Steckdose mit dem Schalter gemäß Fig. 25 in einer Ansicht von vorn,
- Fig. 26: in einer Ansicht von vorn eine Steckdose mit einer figürlichen Ausgestaltung in Form eines Kürbisses,
- Fig. 27: in einer Ansicht von vorn eine Steckdose mit einer tunnelartigen Randausgestaltung,
- Fig. 28: in einer Ansicht von vorn einen mit einer Steckdose kombinierten Schalter in einem gemeinsamen Gehäuse mit einer figürlichen Ausgestaltung von zwei Fischen,
- Fig. 29: in einer Ansicht von vorn ein Gehäuse mit einer figürlichen Ausgestaltung in Form eines auf einem Blatt sitzenden Frosches, wobei das Gehäuse eine Steckdose und ein Thermometer umfaßt,
- Fig. 30: in einer schaubildlichen Ansicht einen Schalter mit einer figürlichen Ausgestaltung in Form eines Monitors mit Mousepad und Maus,
- Fig. 31: den Schalter gemäß Fig. 30 in einer Ansicht von vorn, und
- Fig. 32: in einer Ansicht von vorn einen Schalter mit zwei Kippschaltern mit einer figürlichen Ausgestaltung in Form einer Maus mit die Kippschalter bildenden Zähnen.

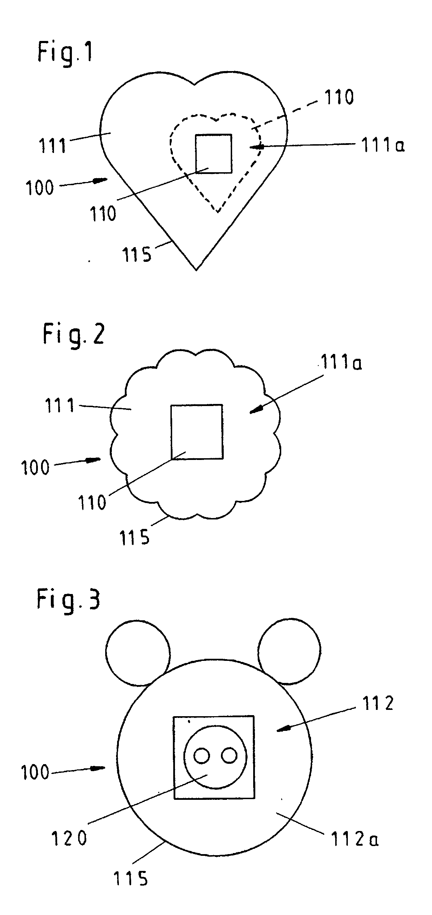

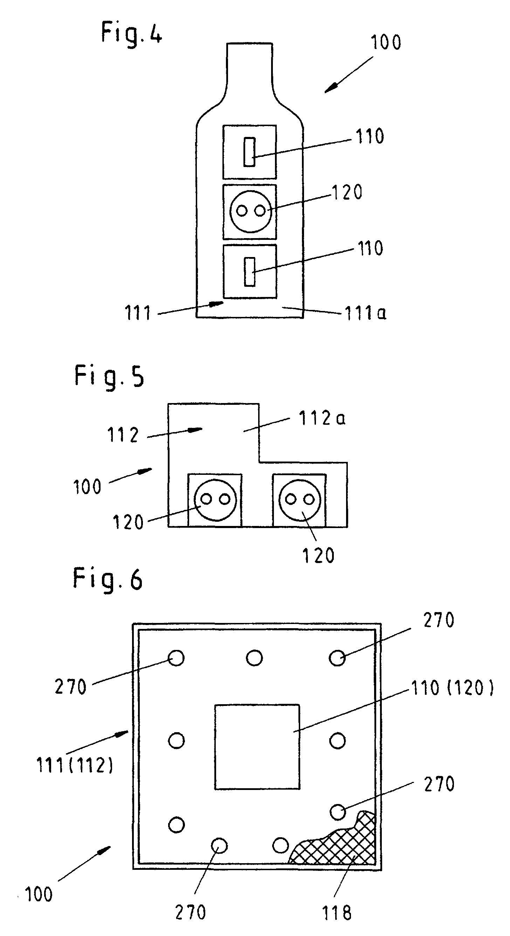

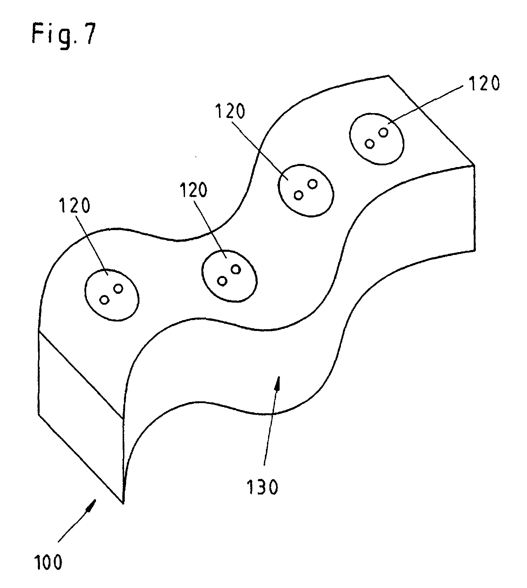

Die elektrische Vorrichtung 100, wie ein Schalter, z.B. Kippschalter 110 (Fig. 1, 2 und 4) oder eine Steckdose 120 (Fig. 3 und 5), in Einfach- oder Mehrfachausführung, zum Einbau in, in der Zeichnung nicht dargestellte Unterputzdosen oder in gehäuseartige Aufputzdosen mit einem die elektrischen Bauelemente, wie Kipptaste, Montagescheibe, Spreizklauen, Anschlußklammern, Kontaktwippe bei Kippschaltern, oder wie Schutzkappe, Schutzkontakt, Stromkontakt, Spreizklammern bei Steckdosen, sind mit einer oberen Abdeckplatte 111, 112 versehen, wobei auch eine Anordnung in Standgehäusen 130 oder in Gehäusen für eine Wandbefestigung möglich sein kann (Fig. 7). Die elektrische Vorrichtung kann auch eine Lautsprecherdose, Antennensteckdose, Jalusienschalter, Klingelschalter und somit jede Art von Steckdose oder Schalter sein.

Die Gehäuseabdeckplatte 111, 112 der elektrischen Vorrichtung 100 weist eine Ausgestaltung in Form eines Motivs, Logos, Zahl od. dgl. 115 auf. So kann die die Abdeckplatte 111 die Form eines Herzens (Fig. 1) oder die Form einer Blume (Fig. 2) aufweisen. Bei der Ausführungsform nach Fig. 3 ist die Abdeckplatte 112 der Steckdose 120 tierkopfartig ausgebildet, z.B. schweinskopfartig.

Die elektrische Vorrichtung 100 nach Fig. 4 besteht, z.B. aus einer Kombination von zwei Kippschaltern 110 und einer Steckdose 120. Alle drei elektrischen Bauelemente sind in einem Bauteil zusammengefaßt und mittels einer Abdeckplatte 111 abgedeckt, die der Form einer Flasche entspricht. Die Abdeckplatte 111, 112 kann jede beliebige Form und Gestalt aufweisen. So kann z.B. die Abdeckplatte 111, 112 die Aufmachung einer Zigarettenpackung oder eines andersartig gestalteten Werbeartikels entsprechen. Auch Zahlen, Logos u. dgl. können zur Formgebung und Gestaltung der Abdeckplatte herangezogen werden, wobei neben einer flaschen-, d.h. plattenförmigen Wiedergabe der Ausgestaltung auch eine plastische Ausgestaltung vorgesehen sein kann.

Nach Fig. 5 weist die Abdeckplatte 112 z.B. die Form eines Kraftfahrzeuges auf, dessen Fahrzeugräder durch zwei Steckdosen 120 angedeutet bzw. symbolisiert sind. Neben einer quadratischen, runden oder ovalen Form, kann die Abdeckplatte 111, 112 jegliche andere geometrische Form aufweisen.

Die freien Randbereiche bzw. der umlaufende Rand 111a, 112a der Abdeckplatten 111, 112 können als Werbefläche verwendet und eingesetzt werden. Auch besteht die Möglichkeit, in die Abdeckplatten 111, 112 Leuchtmittel, wie z.B. Leuchtdioden 270 zu integrieren (Fig. 6), die auch als farbige Leuchtmittel eingesetzt werden können. So können bei der Ausgestaltung einer Abdeckplatte in Herzform gemäß Fig. 1 z.B. rotleuchtende Leuchtmittel eingesetzt werden. Das Ein- und Ausschalten dieser Leuchtmittel kann über einen gesonderten Schalter erfolgen oder wird über den Kippschalter 110 der elektrischen Vorrichtung 100 gesteuert. Nur um den Schalter oder die Steckdose herum oder auch nur um die bereits vorhandene Abdeckplatte herum kann ein neuer Rand oder / Abdeckplatte in jeder Form, Größe, Dicke, Farbe, Material (auch nur ein Aufkleber aus selbstklebender Folie oder Papier) mit und ohne Schriftzügen oder in einer plastischen Gestaltung (z.B. ein Politikerkopf als Schutzfang), mit Geräusch oder Musik oder Stimme oder Beleuchtung auch in Kombination lösbar oder fest angebracht werden.

Die Gehäuseabdeckplatte 111, 112 besteht aus Holz, Metall, Glas, Stoff, Plüsch oder Kunststoff oder jedem anderen Material oder ist mit einem Überzug 118 aus einem Gewebezuschnitt oder einem anderen geeigneten Material versehen.

Des weiteren ist die Gehäuseabdeckplatte 111, 112 farbig ausgestaltet.

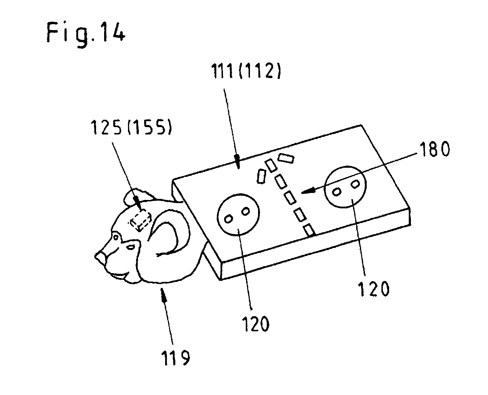

Die Gehäuseabdeckplatte 111, 112 ist z.B. als Aufputz- Bauelement ausgebildet und weist eine plastische Ausgestaltung, z.B. in Tierform auf, wobei auch z.B. die Gehäuseabdeckplatte 111, 112 mit einem plastischen kopfartigen Element 119 versehen sein kann (Fig. 14).

Die in den Fig. 1 bis 6 dargestellte Gehäuseabdeckplatte 111, 112 hat eine quadratische, rechteckförmige oder eine andere geometrische Form.

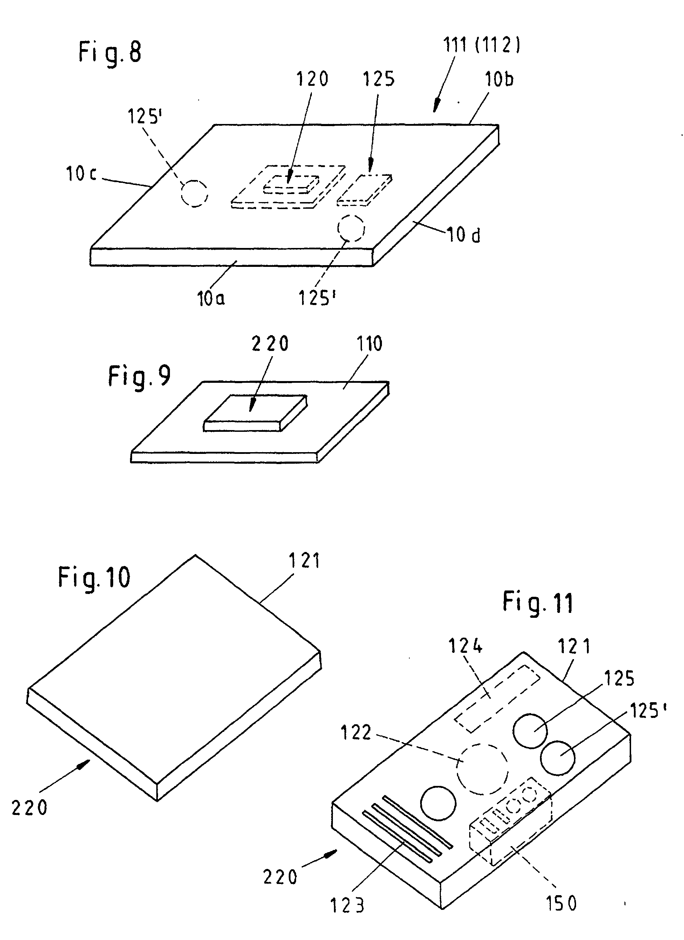

Die Abdeckplattenseiten sind mit 10a, 10b, 10c, 10d bezeichnet (Fig. 8), wobei der Kippschalter oder die Steckdose mit dargestellt ist.

Gemäß Fig. 1 ist die Abdeckplatte 111, 112 mit einem Sprach- und/oder Musikmodul 220 versehen, welches an oder unter der Abdeckplatte oder in die Abdeckplatte integriert ist.

Dieses Sprach- und/oder Musikmodul 220 ist auf einem plattenförmigen oder folienförmigen Träger 210 angeordnet, und vermittels dieses Trägers 210 ist das Sprach- und/oder Musikmodul 220 an oder in der Abdeckplatte 111, 112 angeordnet, wobei auch eine direkte Anordnung des Sprachund/oder Musikmoduls 220 an oder in der Abdeckplatte 111, 112 möglich ist, wenn das Gehäuse, welches das Sprach- und/oder Musikmodul 220 aufnimmt, entsprechend gestaltet ist. Eingesetzt wird ein programmierbares oder vorprogrammiertes oder besprechbares Sprach- und/oder Musikmodul 220, wobei die Anordnung des Sprach- und/oder Musikmoduls 220 an oder in der Abdeckplatte 111, 112 derart ist, daß über eine mechanische oder licht-optische-, oder durch Bewegung oder Druck ausgelöste Steuerung, wobei jede Art von Steuerung einsetzbar ist, auch eine Microcomputer- oder Microprozessor-Steuerung die In- und Außerbetriebnahme des Sprach- und/oder Musilmoduls durch Wiedergabe der Sprachund/oder Musikaufzeichnung ausgelöst wird. Hierzu ist an der Abdeckplatte 111, 112 oder in die Abdeckplatte 111, 112 integriert ein Ein- und Ausschalter 225 oder ein Sensor 225', wobei auch bei einem Kipp- oder Drucktastenschalter die Steuerung des Sprach- und/oder Musikmoduls 220 durch den Schalter erfolgen kann. Das Sprach- und/oder Musikmodul/ Mikrocomputer kann auch im/an/unter dem Schalter bzw. der Steckdose angeordnet sein. Zur Sprachwiedergabe kann die Abdeckplatte z.B. auch als Lautsprecher eventuell mit durchlässigen "Rillen" ausgebildet sein. Der Lautsprecher ist dann hinter der Abdeckplatte angeordnet. Auch kann das Mikrophon in der Abdeckplatte integriert werden.

Das programmierbare oder vorprogrammierte Sprach- und/oder Musikmodul 220 mit einer Sprach- bzw. Musikaufzeichnung ist vermittels seines Gehäuses 221 (Fig. 10) an der Abdeckplatte 111, 112 befestigt. Dieses in an sich bekannter Weise ausgebildete Sprach- und/oder Musikmodul 220 ist mit dem mechanisch oder licht-optisch gesteuerten Ein- und Ausschalter 225 derart verbunden, daß bei einer äußeren Einwirkung die Inbetriebnahme des Sprach- oder Muskimoduls durch Wiedergabe der Sprach- bzw. Musikaufzeichnung ausgelöst wird. Das Sprach- und/oder Musikmodul 220 selbst besteht aus dem Gehäuse 221 mit einer Stromquelle, bevorzugter Weise mit einer Batterie 222 (Fig. 11), wobei auch ein direkter Stromanschluß (Niedervolt) möglich ist. Ferner weist das Sprachund/oder Musikmodul 220 einen bei 223 angedeuteten Lautsprecher bzw. zur Aufnahme und Wiedergabe eine Mikrophon- Lautsprechereinheit 224 auf, wobei der Ein- und Ausschalter für die Inbetriebnahme des Sprachund/oder Musikmoduls 220 entweder über eine mechanische Steuerung, wie z.B. Hebel, oder über eine licht-optische Zelle / Sensor 225 erfolgt, die bei Lichteinfall oder Lichtstrahlunterbrechung wirksam wird und Steuerströme für die Inbetriebnahme des Sprachmoduls auslöst. Das Sprachund/oder Musikmodul 220 muß nicht unbedingt direkt in einem Gehäuse 221 angeordnet sein; es besteht auch die Möglichkeit, das Sprach- und/oder Musikmodul 220 als Platine auszubilden und so einzusetzen. Der das Sprach- und/ oder Musikmodul 220 betätigende Ein- und Ausschalter 225 kann extern vom Sprach- und/oder Musikmodul 220 an einer beliebigen Stelle der Abdeckplatte 111, 112 angeordnet sein. Besonders vorteilhaft ist dabei, wenn in die Abdeckplatte 111, 112 Kontaktschienen eingearbeitet sind, die bei Druckbelastung das Ein- und Ausschalten des Sprach- und/oder Musikmoduls 220 bewirkt.

Ein Auslösen des Sprach- und/oder Musikmoduls 220 über Schallwellen , (Körper-) Wärme, Gestik, Fingerabdruck oder Infrarot ist ebenso möglich wie vermittels einer Berührungstastatur. Auch in Verbindung mit einem in an sich bekannter Weise ausgebildeten Bewegungsmelder ist das Sprach- und/oder Musikmodul 220 ein- und ausschaltbar. Die Betätigung des Sprach- und/oder Musikmoduls 220 für die Wiedergabe einer Sprachoder Musikaufzeichnung ist immer derart, daß bei äußeren mechanischen, optischen, insbesondere licht-optischen oder Schallwellen-Einflüssen das Sprach- und/oder Musikmodul in Betrieb gesetzt wird. Jede Art von Schaltern sind möglich zum Auslösen von Sprache, Musik, Bewegung, Licht.

Die Sprachaufzeichnung kann laufend oder persönlich wiedergegeben werden und zwar mit den verschiedensten Sprach- und/oder Musikaufzeichnungen. Die entsprechende Sprach- und/oder Musikaufzeichnung kann in dem Modul 220 vorprogrammiert sein. Es besteht jedoch auch die Möglichkeit, durch Verwendung einer Aufnahme- und Wiedergabeeinrichtung 250 jeweils gewünschte Texte selbst in das Modul 220 einzugeben, um dann diese Sprachaufzeichnung im jeweils erforderlichen Fall wiedergeben zu können.

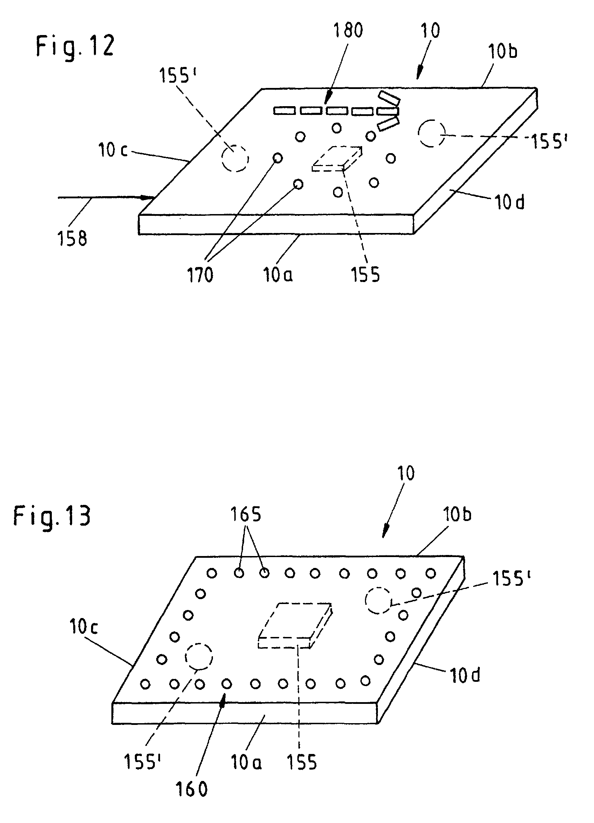

Bei der Ausführungsform gemäß Fig. 12 ist die Abdeckplatte 111, 112 mit einer Anzahl von mit einer Stromzufuhr 258 verbundenen Leuchten oder Leuchtdioden 270 und mit einem mechanischen, licht-optisch- oder druckgesteuerten Ein- und Ausschalter 255 oder mit wenigstens einem Sensor 255' versehen, wobei die Leuchten oder Leuchtdioden 270 über die Fläche der Abdeckplatte 111, 112 verteilt an dieser angeordnet sind. So besteht die Möglichkeit bestimmte Flächenbereiche der Abdeckplatte 111, 112 mit einer Anzahl von Leuchtdioden 270 zu versehen, die in gleicher Weise steuerbar sind, wie das vorangehend beschriebene Sprach- und/oder Musikmodul 220. Für die Inbetrieb- und Außerbetriebnahme der Leuchten bzw. der Leuchtdioden kann ein gesonderter Schalter oder Steuereinrichtung an der Abdeckplatte vorgesehen sein. Bei einem Kippschalter erfolgt die Steuerung der Leuchten vorzugsweise über den Schalter selbst.

Beim Einschalten der Leuchten oder der Leuchtdioden leuchten diese auf und über ein Zeitschaltwerk verlöschen die Leuchten oder Leuchtdioden 270 nach einer vorgegeben Zeit. Es besteht auch die Möglichkeit, die Leuchten durch einen handelsüblichen Schalter in Betrieb zu setzen, wobei die Leuchten auch ständig in Betrieb sein können, so daß sie ständig leuchten. Wenn die Leuchten kein Licht mehr aussenden sollen, dann werden bei einer Betätigung des Schalters (Ein- und Aus-Schalter) die Leuchten außer Betrieb gesetzt.

Anstelle von einer einzigen Leuchte oder von einzelnen Leuchten oder Leuchtdioden 270 kann die Abdeckplatte 111, 112 nach dem Ausführungsbeispiel gemäß Fig. 13 mit einem umlaufenden Lauflicht 260 versehen sein, das aus einer Anzahl von Leuchten oder Leuchtdioden 265 besteht und z.B. am Umfang der Abdeckplatte 111, 112 auf dieser angeordnet ist. Anstelle eines Lauflichtes 260 kann auf der Abdeckplatte auch ein laufender Pfeil 280 vorgesehen sein, der beispielsweise optische Hinweise auf eine ganz bestimmte einzuhaltende Richtung dem Benutzer gibt, wobei die Abdeckplatte selbst mit entsprechenden aufgedruckten Hinweisen versehen sein kann, die in Verbindung mit dem laufenden Pfeil 280 vom Benutzer aufgenommen werden.

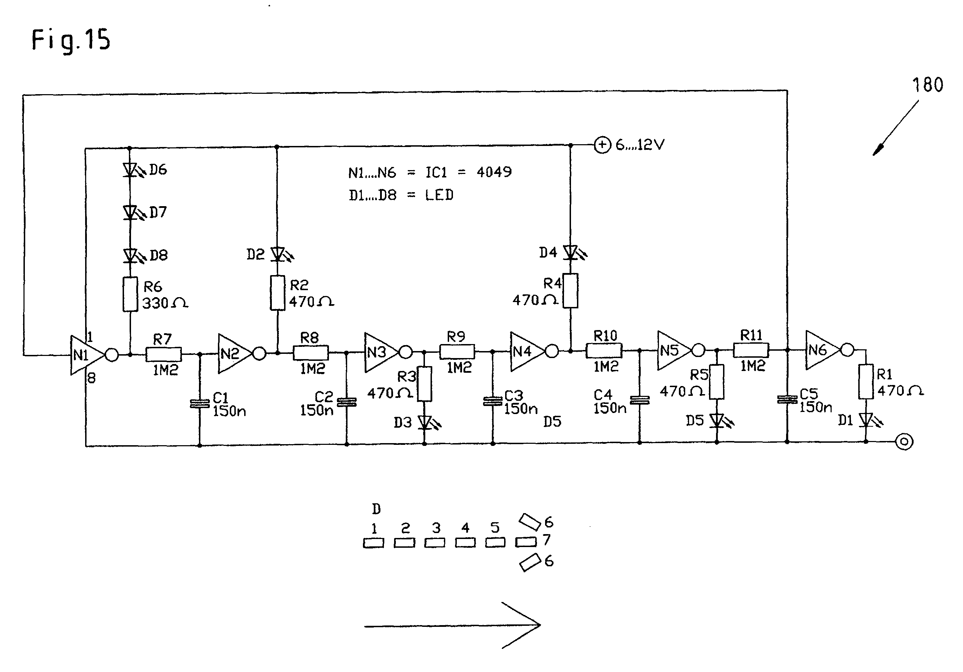

Fig. 15 zeigt eine Schaltung für einen derartig laufenden Pfeil 280 gemäß Fig. 14. Dieses Lauflicht 280 besteht aus einer Anzahl von rechteckigen LEDs, die in Pfeilform angeordnet sind. Die Schaltung ist mit nur einem IC aufgebaut, das jedoch sechs Inverter enthält. Jeder Inverter ist mit einem RC-Netzwerk am Ausgang geschaltet. Der Inverter-Ausgang muss also zunächst über den Widerstand einen Kondensator aufladen, bevor der nächste Inverter angesteuert werden kann. Durch diese Beschaltung wer den die LEDs schrittweise angesteuert. Das IC ist dabei so ausgelegt, daß es die LEDs ohne weiteres steuern kann. Die gesamte Schaltung braucht beispielsweise nur etwa 50 mA und kann daher problemlos mit einer 9-V-Batterie betrieben werden. Anstelle eines laufendes Lichtpfeiles 280 können die einzelnen LEDs auch in Form von Herzen, Sternen o. dgl. eingesetzt werden.

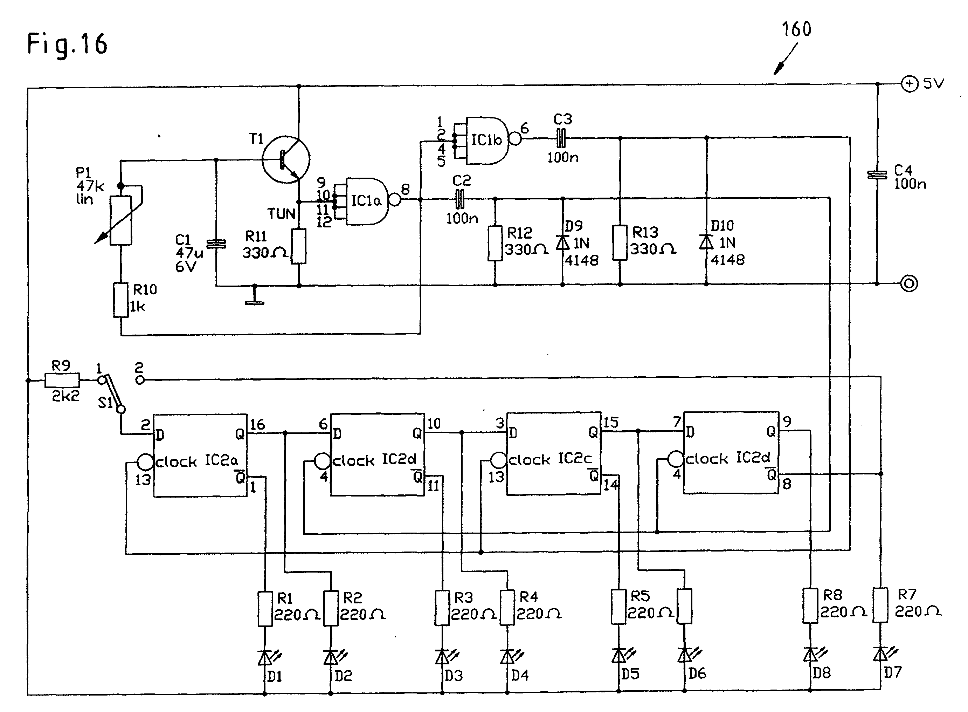

Für das gemäß Fig. 13 auf der Abdeckplatte 111, 112 angeordnete Lauflicht 260 kann beispielsweise die in Fig. 16 dargestellte Schaltung eingesetzt werden. Dieses Lauflicht 260 besteht je nach Größe der Abdeckplatte 111, 112 aus einer entsprechenden Anzahl von Leuchtdioden. Bei dem Schaltungsbeispiel liegen z.B. acht Leuchtdioden an den Q- und Q-Ausgängen von vier Data-Flipflops. Es leuchten somit immer vier LEDs, die anderen sind aus.

Ändern sich dabei die Steuerbefehle an den Informationseingängen der Flipflops, so verlöschen die Leuchten, die an den Ausgängen angeschlossenem LEDs. Die Steuerung der Flipflops erfolgt derart, dass beim Wechsel des Leuchtzustandes von einer "Viererkonstellation" zur nächsten ein sehr schöner Wandereffekt entsteht. Mit Hinweis auf die Schaltung gemäß Fig. 16 wird mit S1 die Schaltung gestartet. Beim Einschalten der Speisespannung muß dieser Schalter in Stellung 1 stehen; auf den Data-Eingang des ersten Flipflops gelangt dann eine "1". Der Schalter bleibt in Stellung 1, bis die zu Anfang eingegebene "1" durch die gesamte Kette gelaufen ist; dann bringt man den Schalter in Stellung 2. Der Q-Ausgang des letzten Flipflops ist dann mit dem Data-Eingang des ersten Flipflops verbunden. Die weiteren Zyklen laufen nun automatisch ab. Für die Frequenz der Steuerimpulse ist die Auf- und Endladezeit des Kondensators C1 maßgebend. Da beide Zeiten u.a. vom Widerstandswert im Basisstromkreis (P1 und R10) abhängen, kann man mit 1 die Frequenz der Steuerimpulse und damit die Lauflichtfrequenz einstellen. Die acht LEDs geben relativ wenig Licht ab, deshalb ist die Schaltung in der angegeben Ausführung z.B. für den Hausgebrauch geeignet. Ersetzt man die LEDs durch Optokoppler, so können über geeignete Leistungsstufen anderweitige Leuchten, wie z.B. kleine Glühlampen, gesteuert werden. Neben Leuchten, Leuchtdioden 270 und dem Lauflicht 260 mit weißer Lichtausstrahlung können diese auch so ausgestaltet sein, daß farbiges Licht ausgesandt wird. Außerdem können alle Leuchtmittel an beliebiger Stelle der Abdeckplatte 111, 112 an oder auf oder in dieser oder auch nur einzeln angeordnet sein.

Die Ausführungsform, bei der die Abdeckplatte 111, 112 mit einem Sprach- und/oder Musikmodul 220 und mit Leuchten oder Leuchtdioden 270 oder einem Lauflicht 260 versehen ist, ist zeichnerisch nicht dargestellt.

Bei dem Ausführungsbeispiel gemäß Fig. 14 ist die Abdeckplatte 111, 112 bevorzugter Weise an einer ihrer Schmalseiten so ausgebildet, daß die sie in ein zwei- oder dreidimensionales kopfartiges Element 119, wie z.B. Tierkopf, übergeht. Dieses kopfartige Element 1190 kann beispielsweise wie dargestellt den Kopf eines Bären bilden. Dieses kopfartige Element 119 ist mit der Abdeckplatte 111, 112 fest oder lösbar verbunden. Bei der mit einem Tierkopf versehenen Abdeckplatte 111, 112 gemäß Fig. 14 ist die Abdeckplatte beispielsweise mit einem laufenden Lichtpfeil 280 versehen. Die Abdeckplatte kann jedoch in gleicher Weise mit einem Sprachund/oder Musikmodul 220 und/oder mit Leuchten oder Leuchtdioden 270 versehen sein. Der Ein- und Ausschalter 225 bzw. Sensor 225' sowohl für das Sprach- und/ oder Musikmodul 220 und/oder für die Leuchten die Leuchtdioden 270, für den laufenden Pfeil 280 oder für das Lauflicht 260 kann dann in dem kopfartigem Element 119 angeordnet sein, sodass die Steuerung hierüber dann erfolgt.

Das in der Abdeckplatte 111, 112 ausgebildete Lauflicht 260 kann beispielsweise als Werbeträger ausgebildet sein.

Mit dem Sprach- und/oder Musikmodul 220 ist zur Wiedergabe von Wort und Musik ein Lautsprecher 230 verbunden, der in die Abdeckplatte 111, 112 oder in das kopfartige Element 119 integriert ist.

Das kopfartige Element 119 und auch die Gesamtausgestaltung der Abdeckplatte 111, 112 ist nicht beschränkt beispielsweise auf die Form eines Bärens, sondern auch jegliche andere Tiergestalt kann für die Herstellung der Abdeckplatte mit ihrem kopfartigen Element 119 als Vorbild genommen werden. Das kopfartige Element 119 braucht jedoch nicht Tiergestaltform aufzuweisen, sondern es können auch menschlich gestaltete Köpfe entsprechend Puppenköpfen mit der Abdeckplattenfläche verbunden sein. Das kopfartige Element 119 kann auch eine Zahl oder ein Logo darstellen.

Das die elektrische Vorrichtung 100 aufnehmende Gehäuse 130 kann plastisch gestaltet sein und nicht nur z.B. die Form einer Schlange (Fig. 7) aufweisen, sondern auch andere dreidimensionale Ausgestaltungen.

Auch ein Nachrüsten elektrischer Vorrichtungen mit den erfindungsgemäßen Ausgestaltungen ist möglich.

Nachrüstbar kann somit sein:
- die Gesamteinheit wie Abdeckplatte und Steckdosen- oder Schalterinhalt;
   auch ein Austausch z.B. durch eine neue Abdeckplatte mit einer neuen Form und/oder Schalter / Steckdose mit einer neuen Form ist möglich;
- nur der Schalter oder die Steckdose sind austauschbar z.B. Austausch durch Schalter / Steckdose mit einer neuen Formgebung;
- nur die Abdeckplatte selber ist austauschbar z.B. Austausch durch eine neue Abdeckplatte mit einer neuen Formgebung;
- die alte Abdeckplatte bleibt vorhanden (mit altem oder neuem Schalter / Steckdose) und wird ergänzt mit einer neuen Abdeckplatte oder neuem Rand mit neuer Form um die vorhandene Abdeckplatte herum;
- der alte Schalter oder Steckdose bleibt vorhanden und wird mit einer neuen Abdeckplatte mit neuer Form um den Schalter herum nachgerüstet.

Nicht nur die Abdeckplatte, sondern auch nur der Schalter oder nur die Steckdose selbst können ausgestaltet sein als jede Art von Form, Logo, Motiv, Zahl, z.B. in Herzform, Autoform, Tierform oder Politikerkopf, (plastisch, dreidimensional oder einfach) und/oder bei Betätigung des Schalters oder Vorbeigehen ertönt ein Geräusch und/oder Musik und/oder Stimme oder es wird eine Beleuchtung ein- und ausgestaltet.

Eine Beleuchtung kann in oder an oder neben oder auf der Abdeckplatte und/oder dem Schalter oder Steckdose auch als Dauerbeleuchtung vorgesehen sein. Mit Hilfe eines Lauflichtes z.B. leuchten ständig Sterne. Diese Beleuchtung kann auch durch einen separaten Schalter bzw. durch den eigentlichen Schalter an oder ausgeschaltet werden oder z.B. nur bei Dunkelheit leuchten.

Auch akustische Warn- bzw. Sicherheitshinweise bzw. alle Hinweise, die durch Schilder möglich sind, können durch das Sprachmodul gegeben werden. Auch ein Microcomputer-/prozessor ist einsetzbar, der die Sprache und/oder Beleuchtung steuert.

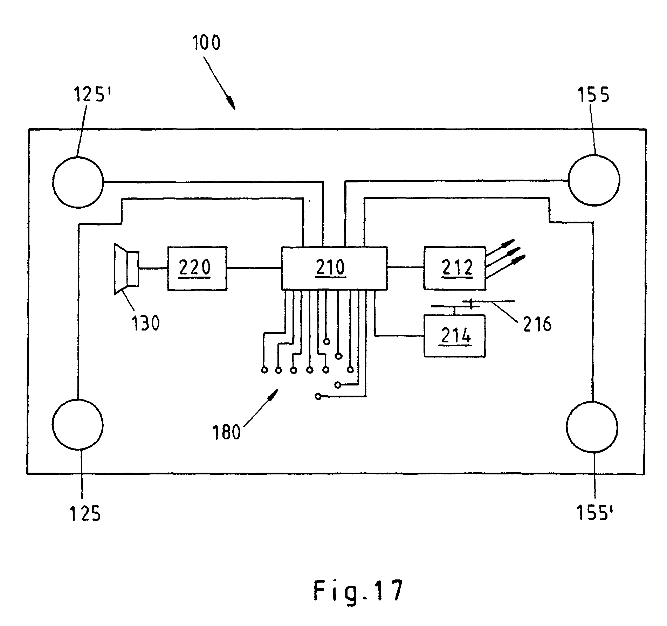

Fig. 17 zeigt eine alternative bevorzugte Ausführungsform eines Schalters bzw. einer Steckdose, welche einen Mikrocomputer 210, beispielsweise in Form eines Mikroprozessor, als zentrale Steuereinheit aufweist. Alle ggf. vorhandenen Komponenten, wie Ein-/Ausschalter 125, 155, Sensoren 125', 155', das Sprach- und/oder Musikmodul 220 bzw. ein Lauflicht in Pfeilform 280 sind mit dem Mikrocomputer 210 verbunden. Dieser nimmt entsprechende Signale der Sensoren 225, 225', 155, 155' auf und aktiviert und steuert dementsprechend das Sprach- und/oder Musikmodul 220 bzw. das Lauflicht 260 oder eine Beleuchtung. Optimal weist der Mikrocomputer 210 einen Sprachwortschatz-Speicher auf, aus dem ggf. Sprachdaten an das Sprach- und/oder Musikmodul 220 zur Ausgabe über Lautsprecher 230 übertragen werden. Auch Leuchtmuster für die Leuchtdioden 270 sind ggf. in dem Mikrocomputer 210 wahlweise aufrufbar gespeichert. Auf diese Weise sind verschiedenste Sprachausgaben und/oder Leuchtmuster darstellbar, ohne daß ggf. eine Schaltung der Leuchtdioden 270 ausgetauscht oder das Sprach- und/oder Musikmodul 220 neu programmiert werden muß.

In einer bevorzugten Weiterbildung der Erfindung ist zusätzlich ein Kommunikationsgerät, wie beispielsweise eine Infrarot-Schnittstelle (IR-Schnittstelle) 212 vorgesehen, welche ebenfalls vom Mikrocomputer 210 angesteuert und ausgelesen wird. Über diese IR-Schnittstelle kann der Mikrocomputer 210 mit externen Geräten kommunizieren. So ist es beispielsweise möglich, die Speicher für Sprachwortschatz bzw. Leuchtmuster des Mikrocomputers 210 zu beschreiben, externe Sensoren zum Auslösen einer Sprachausgabe oder eines Leuchteffektes, wie Bewegungsmelder oder Lichtschranken, mit dem Mikrocomputer 210 zu verbinden oder über eine Kommunikation zwischen IR-Schnittstellen verschiedener Schalter bzw. Steckdosen eine entsprechend synchronisierte Animation von entsprechenden Elementen der beiden Schalter bzw. Steckdosen zu steuern.

In einer weiteren bevorzugten Weiterbildung der Erfindung sind von Mikromotoren (Servos) 214 über ein Gestänge 216 bewegbare Teile an dem Schalter bzw. der Steckdose angeordnet, wie beispielsweise Ohren oder Mund eines an dem Schalter oder Steckdose angeordneten Tierkopfes 119. Auch diese Mikromotoren 214 werden vom Mikrocomputer 210 angesteuert.

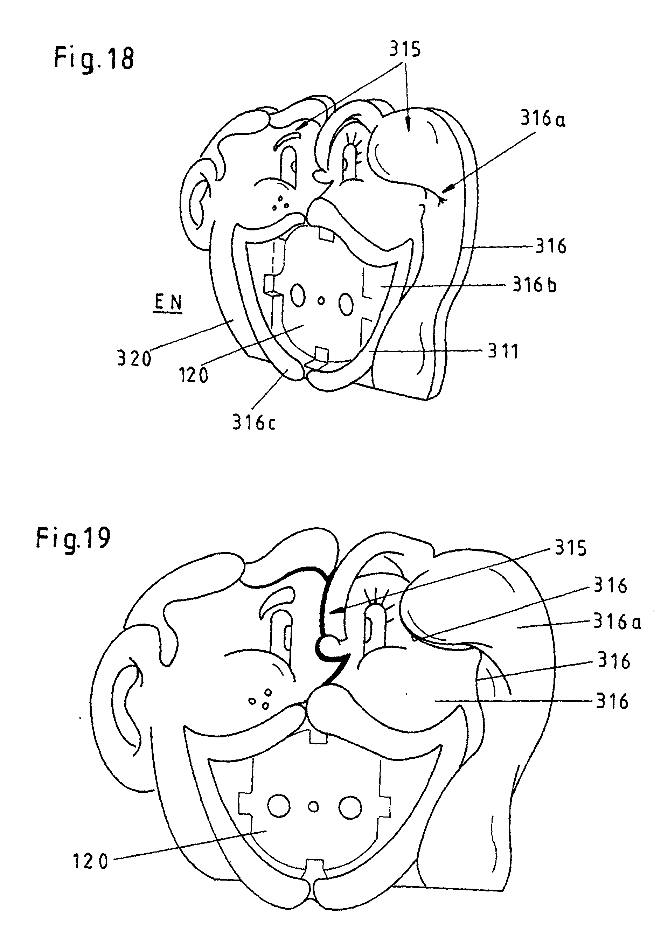

Die Fig. 18 bis 32 zeigen verschiedene Ausführungsformen einer Oberflächenprofilierung für Schalter 110 und Steckdosen 120, wobei es im wesentlichen strukturelle Formgestaltung 315 ankommt, aufgrund der sich eine Oberflächenprofilierung 316 mit erhaben ausgebildeten Profilabschnitten 316a und vertieft ausgebildeten Profilabschnitten 316b ergibt, wobei sich verstärkte Profilstege 316c ergeben. Diese Profilabschnitte 316a, 316b und 316c ergeben. Diese Profilabschnitte 316a, 316b und 316c ergänzen sich zu einem Formkörper der aufgrund seiner motivartigen Struktur eine hohe Eigenstabilität ergibt, was wirtschaftlich den Vorteil eines relativ geringen Materialaufwandes für die Herstellung der Schalter und der Steckdosen ergibt, denn es besteht somit die Möglichkeit ein dünnwandiges Kunststoffmaterial einzusetzen, beispielsweise hergestellt im Tiefziehverfahren, wobei der so erhaltene Formkörper auch nachträglich auf die Gehäuseabdeckplatten 320 bekannter Schalter 110 bzw. Steckdosen 120 aufgesetzt werden kann, wobei in diesen Formkörper die Schalter und die Steckdosen integriert sind. Der Formkörper selbst ist dann mit einer umlaufenden Randverstärkung 311 versehen, so daß das Einführen eines Steckers in eine Steckdose problemlos vorgenommen werden kann (Fig. 18 und 19).

Der Formkörper der sich aufgrund der strukturellen Formgestaltung 315 mit der Oberprofilierung 316 ergibt, weist jeweils in Abhängigkeit von der Formgestaltung ansteigende und absenkende Flächenabschnitte 316d, 316e auf, wobei bei der Ausgestaltung mit einem umlaufenden Rand 311 z.B. im Bereich der Steckdose 120 sich ein wandverstärkender Profilkörper 330 ergibt.

Der Schalter 116 oder mindestens eine Steckdose 120 bzw. deren Gehäuseabdeckplatten 320 weist eine strukturelle Ausgestaltung bzw. Formgebung 315 mit unterschiedlichen Oberflächenprofilierungen 316 mit den erhabenen Profilabschnitten 316a und vertieften Profilabschnitten 316b bzw. mit Profilstegen 316c auf, wobei sich die unterschiedlichen Profilabschnitte 316a, 316b, 316c zu einem Formkörper mit motivartiger stabilisierenden Struktur ergänzen.

Die Fig. 18 und 19 zeigen eine Ausführungsform einer Steckdose mit einer figürlichen Formgebung der die Steckdose umrahmenden äußeren Abdeckplatte 320 in Form zweier zueinander gekehrten personifizierten Köpfe, die eine strukturelle Formgestaltung 315 und somit eine Oberflächenprofilierung 316 aufweisen.

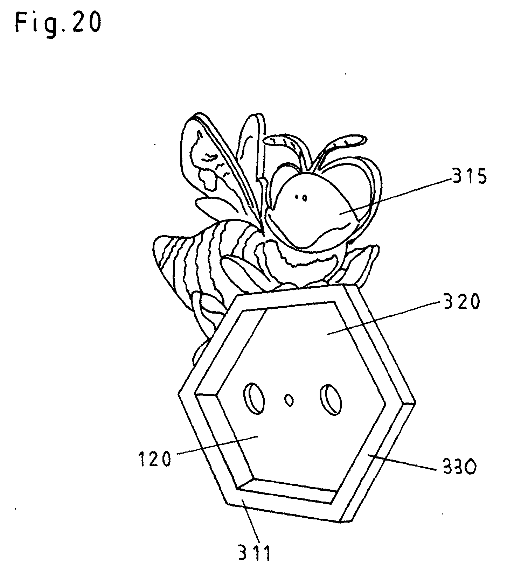

Fig. 20 zeigt eine Steckdose mit einem vorderen, sechseckigen Rahmen und aufgesetzten Figurenelement, z.B. in Form einer Biene, wobei der sechseckige Rahmen als umlaufender Rand 311 eine wandverstärkende Profilierung 330 bildet.

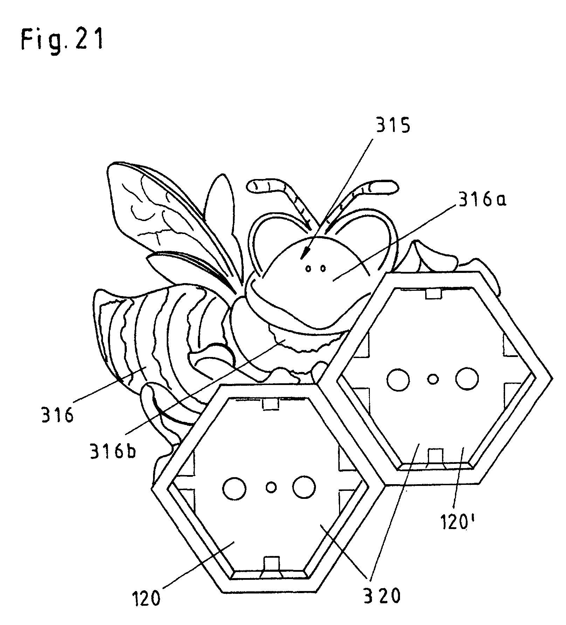

Eine ähnliche Ausgestaltung wie Fig. 20 zeigt Fig. 21 jedoch mit dem Unterschied, daß hier eine Doppelsteckdose 120, 120' dargestellt ist, wobei die beiden Gehäuse der beiden Steckdosen verbunden und zusammengehalten sind mit einer figürlichen Formgestaltung in Form einer Biene, deren Oberflächenprofilierung als verstärkendes Element die beiden Steckdosen 120, 120' zusammenhält.

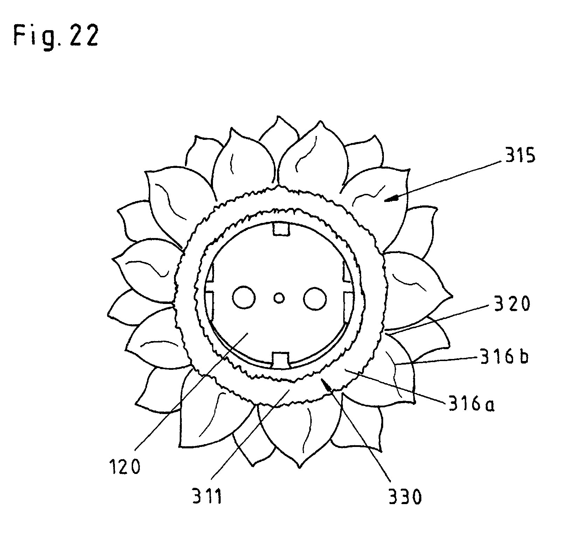

Eine Steckdose 120 mit einer blumenornamentalen Randausgestaltung ist in Fig. 22 dargestellt. Hier bildet der umlaufende Rand 311 eine wandverstärkende Profilierung 330, so daß ein in die Steckdose 120 eingeschobener Stecker trotz der dünnwandigen Profilierung des Formkörpers mit sicherem Halt in der Steckdose gehalten ist.

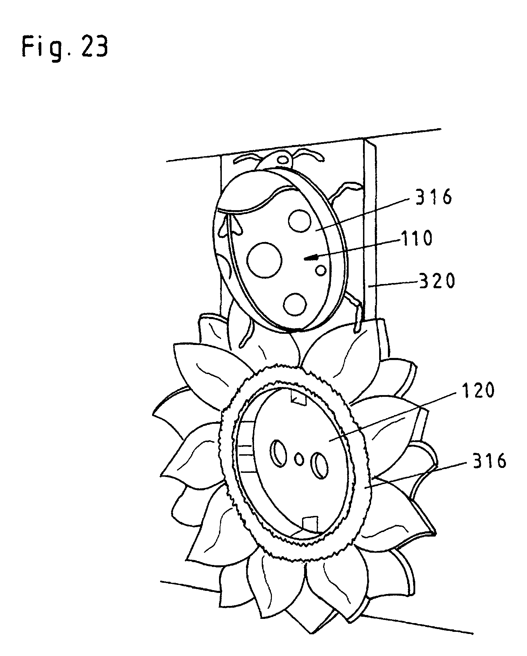

Die Kombination einer Steckdose 120 mit einem Schalter 110, hier ein Drehschalter, zeigt Fig. 23. Die Steckdose 120 ist dabei entsprechend Fig. 22 ausgebildet, wohingegen der Drehschalter 110 eine strukturelle Formgestaltung 315 in Form eines Marienkäfers aufweist, was den Vorteil erbringt, daß die sonst scheibenförmigen Handhaben zur Betätigung des Drehschalters durch die zusätzliche Strukturelle Formgestaltung einmal recht dünnwandig gehalten werden können und zum anderen sich dadurch eine hohe Griffestigkeit für die Betätigung des Drehschalters ergibt.

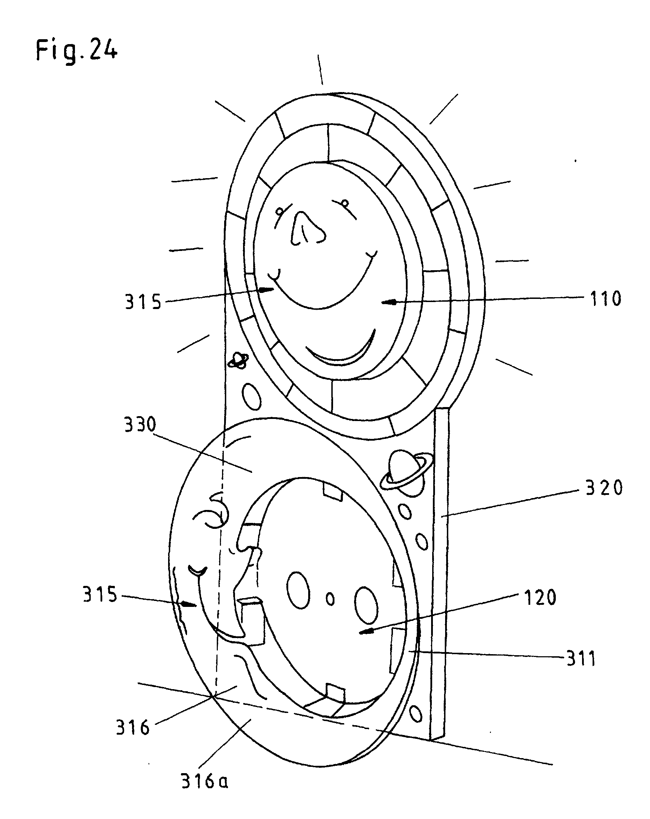

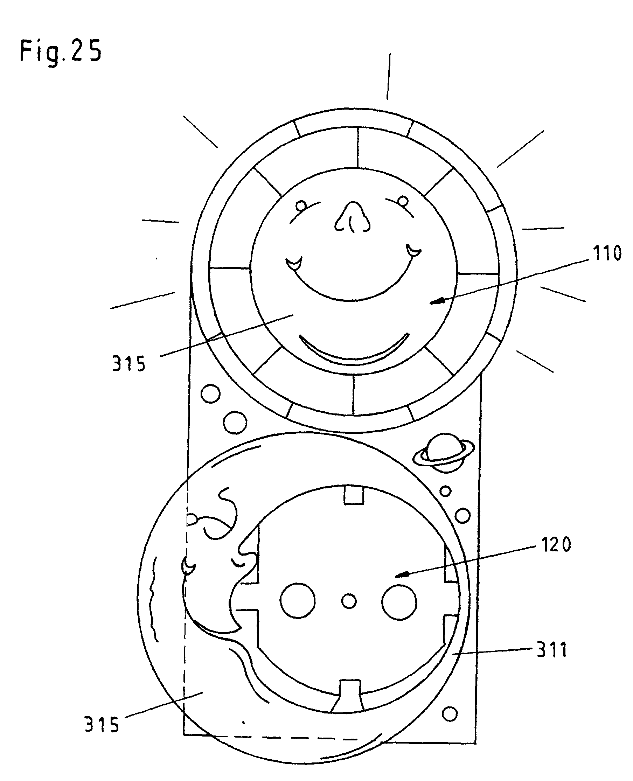

Die Kombination einer Steckdose 120 mit einem Schalter 110 zeigt Fig. 24 und 25. Die Steckdose 120 weist eine strukturelle Formgestaltung 315 in Form eines Viertelmondes auf, wohingegen der Schalter 110, hier als Drehschalter ausgebildet, eine figürliche strukturelle Formgestaltung aufweist.

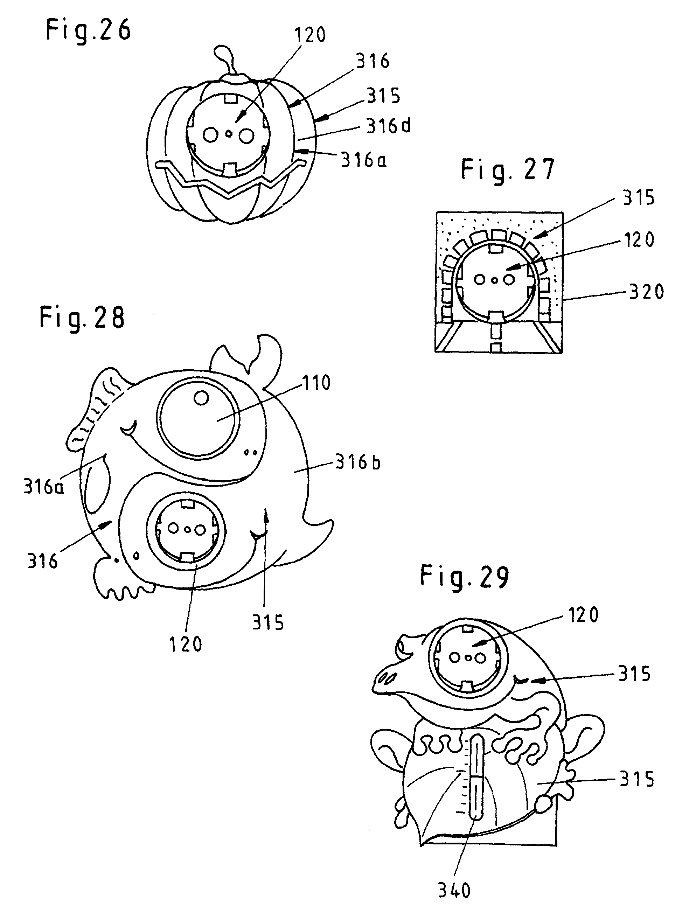

Fig. 26 zeigt eine strukturelle Formgestaltung bzw. ein Formkörper 315 in Form eine Kürbisses, in den eine Steckdose 120 integriert ist. Dieser Formkörper kann als Hohlkörper dabei ausgebildet sein und aus lichtdurchlässigem Material bestehen. Es ist in diesem Zusammenhang die Möglichkeit gegeben, dann in dem Innenraum des Formkörpers eine Leuchtdiode oder anderweitiges Leuchtmittel anzuordnen.

Bei der Ausführungsform nach Fig. 27 besteht die strukturelle Formgestaltung für eine Steckdose 120 in der Ausbildung eines tunnelartigen Gehäuses mit entsprechender Farbgebung, d.h. die die Steckdose selbst bildende Abdeckplatte mit den Durchbrechungen zum Einführen der Stekkerstifte kann beispielsweise in schwarzer Farbe gehalten sein.

Fig. 28 zeigt die Kombination einer Steckdose 120 mit einem Schalter 110, wobei die strukturelle Formgestaltung 315 in zwei ineinandergreifenden fischartigen Gehäusen besteht, wobei die strukturelle Formgestaltung 315 derart ist, daß das Auge der einen Fischgestalt den Drehschalter bildet und das Auge der anderen Fischgestalt die Steckdose aufnimmt. Diese Ausgestaltung nach Fig. 28 ist auch als Jing und Jang-Symbol ausführbar.

Fig. 29 zeigt eine Ausführungsform für eine Steckdose 120 in Form eines Wetterfrosches und zwar in Verbindung mit einem Thermometer 340, daß in die strukturelle Formgestaltung integriert ist. Die Trägerplatte für das Thermometer 340 ist dabei blattartig ausgebildet, auf dem die froschartige Gestalt aufsitzt, die die Steckdose 120 trägt.

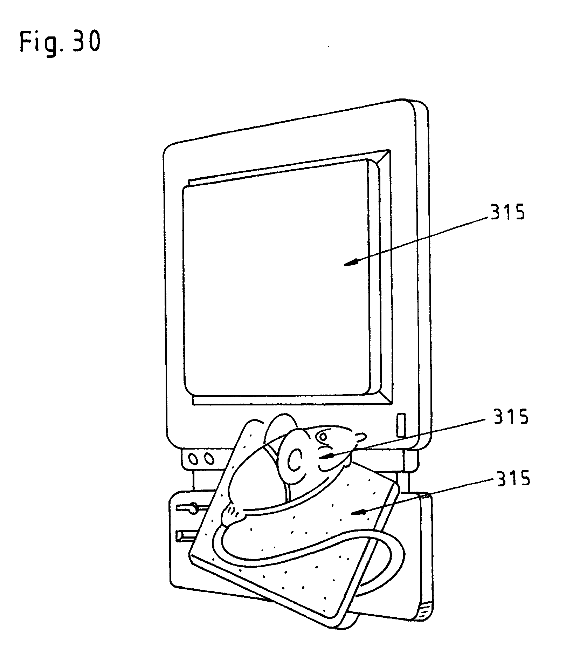

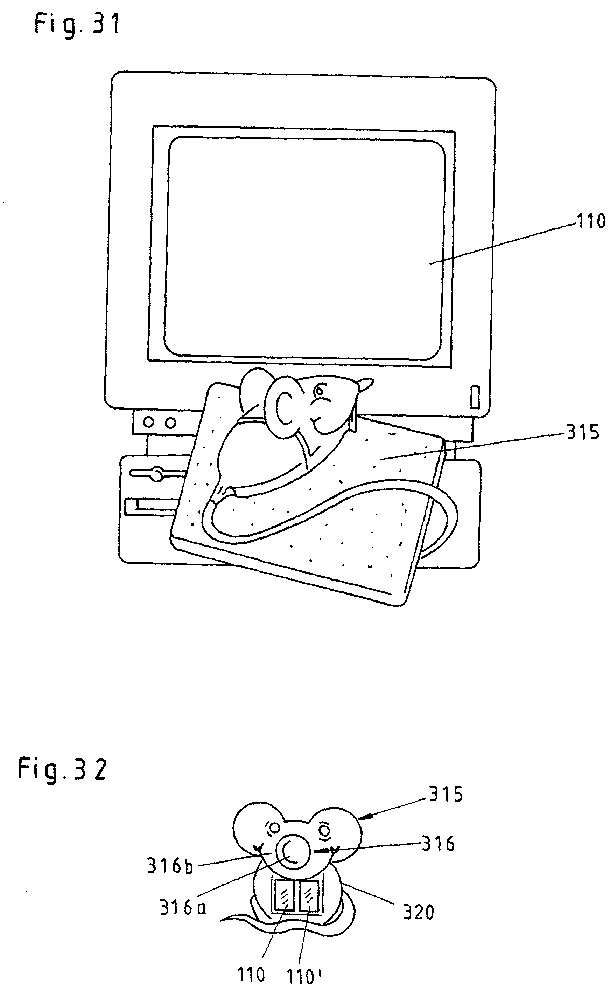

Fig. 30 und 31 zeigen einen Schalter 110 mit einer Formgebung als Computer und Maus. Beide strukturellen Formgestaltungen sind auf einer Gehäuseabdeckplatte 320 die neben dem bildschirmartig ausgebildeten Schalter 110 eine zusätzliche strukturelle Formgestaltung in Form einer mausartigen Figur trägt, wobei alle Teile insgesamt mit der Gehäuseabdeckplatte eine Einheit bilden. Der monitorartig ausgebildete Schalter 110 kann mit einem Werbeaufdruck versehen sein. In das den Schalter 110 tragende Gehäuse kann eine Tonwiedergabeeinrichtung eingebaut sein, über die beispielsweise bei Betätigung des Schalters Monitor- und z.B. Computertöne wiedergibt.

Die Fig. 32 zeigt einen Doppelschalter 110, 110', wobei beide Schalter in eine strukturelle Formgestaltung 315 in Form einer Maus integriert sind, die aufgrund ihren Oberflächenprofilierung vertiefte Profilabschnitte und erhaben ausgebildete Profilabschnitte aufweist, d.h. es sind ansteigende Flächenabschnitte und absenkende Flächenabschnitte gegeben, aufgrund derer sich eine hohe Eigenstabilität dieser strukturellen Formgestaltung ergibt.

Auf und/oder an und/oder in dem Gehäuse von vorhandenen Steckdosen und/oder Schalter und/oder am umlaufenden Rand kann eine neu gestaltete Gehäuseabdeckplatte in einer figürlichen strukturellen Formgestaltung gemäß den Fig. 18 bis 32 angeordnet sein, wobei diese Formgebung auch auf die Schalter bzw. Steckdosengehäuse übergestülpt, auf diese aufgesteckt, aufgeklebt oder aufgeklemmt werden kann, wobei jede Art der Befestigung möglich ist, so daß bestehende, vorhandene und/oder eingebaute Steckdosen und/oder Schalter nicht entfernt zu werden brauchen.

## Patentansprüche

1. Elektrische Vorrichtung, wie Schalter, Steckdose, od. dgl. in Einfach- oder Mehrfachausführung, zum Einbau in Unterprutzdosen oder in Aufputzdosen mit einem die elektrischen Bauelemente aufnehmenden Gehäuse, das mit einer Abdeckplatte (111, 112) versehen ist, oder in ein Gehäuse in Standausführung, wobei die Abdeckplatte (111, 112) mit oder ohne umlaufenden Rand (111a, 112a) versehen ist und eine Ausgestaltung in Form eines Motivs aufweist,
**dadurch gekennzeichnet,**
**dass** der Schalter (110), die Steckdose (120) bzw. deren Gehäuseabdeckplatten (320) bei geringer Wandstärke eine zweidimensionale, oder dreidimensionale und plastische oder anderweitige geometrische und strukturelle Ausgestaltung bzw. Formgebung in Form eines Motivs, Logos oder Zahl (115), und/oder eine figürliche Ausgestaltung bzw. Formgebung (315), wie Blume, Tierform, Herzform, Form eines Gesichts oder einer Persönlichkeit aufweisen, wobei die strukturelle Ausgestaltung bzw. Formgebung (315) zur Erhöhung der Eigenstabilität unterschiedliche Obertlächenprofilierungen (316) mit erhabenen Profilabschnitten (316a) und vertieften Profilabschnitten (316b) und Profilstegen (316c) aufweist, so dass sich die unterschiedlichen Profilabschnitte (316a, 316b, 316c) zu einem dünnwandigen Formkörper mit motivartiger stabilisierender Struktur ergänzen und wobei der umlaufende Rand (311) des Schalters (110) oder der Steckdose (120) oder der Gehäuseabdeckplatten (320) als motivlose oder motivartige wandverstärkende Profilkörper (330) ausgebildet sind, und dass die figürliche strukturelle Formgestaltung der Formkörper (315) fest oder lösbar integrierter Bestandteil des Schalters (110) und/oder der Steckdose (120) bzw. deren Gehäuseabdeckplatten ist, wobei bei der lösbaren Ausführungsform die strukturelle Formgestaltung (315) bzw. ein entsprechender Formkörper auf die Steckdose (120) und/oder den Schalter (110) aufgesteckt, übergestülpt, aufgeklebt oder aufgeklemmt ist.

2. Elektrische Vorrichtung nach Anspruch 1,
**dadurch gekennzeichnet,**
**dass** der umlaufende Rand (111a, 112a) der Gehäuseabdeckplatte (111; 112) als Werbefläche und/oder Schalter/ Steckdose ausgebildet ist.

3. Elektrische Vorrichtung nach einem der Ansprüche 1 und 2,
**dadurch gekennzeichnet,**
**dass** die Gehäuseabdeckplatte (111; 112), der Schalter (110) oder das Steckdosengehäuse aus Holz, Metall, Glas, Stoff, Plüsch oder Kunststoff oder einem anderen Material besteht oder mit einem Überzug (118) aus einem Gewebezuschnitt versehen sind.

4. Elektrische Vorrichtung nach einem der Ansprüche 1 bis 3,
**dadurch gekennzeichnet,**
**dass** die Gehäuseabdeckplatte (111; 112), der Schalter (110) oder das Steckdosengehäuse farblich ausgestaltet ist.

5. Elektrische Vorrichtung nach einem der Ansprüche 1 bis 4,
**dadurch gekennzeichnet,**
**dass** die Gehäuseabdeckplatte (111; 112) und/oder das Gehäuse (130) der elektrischen Vorrichtung (100) als Aufputz-Element eine plastische Ausgestaltung, z.B. in Tierform, aufweist.

6. Elektrische Vorrichtung nach einem der Ansprüche 1 bis 5,
**dadurch gekennzeichnet,**
**dass** die Gehäuseabdeckplatte (111; 112) mit einem plattenförmigen oder folienförmigen Träger (210) mit einem programmierbaren, vorprogrammierten oder besprechbaren Sprach- und/oder Musikmodul (220) mit einer Stromquelle (222) und mit einem mechanischen licht-optisch- oder druckgesteuerten Ein- und Ausschalter (225) oder Sensor (225') versehen ist, das mittels des Trägers (210) an der Wandfläche der Gehäuseabdeckplatte angeordnet oder in die Gehäuseabdeckplatte integriert ist, wobei die Anordnung des Sprach- und/oder Musikmoduls (220) derart ist, dass über die mechanische, licht-optische- oder druckbeaufschlagte vermittels Betätigung, Bewegung oder Druck ausgelöste Steuerung die Inund Außerbetriebnahme des Sprach- und/ oder Musikmoduls (220) durch Wiedergabe der Sprach- und/oder Musikaufzeichnung, beispielsweise über einen Lautsprecher (230), ausgelöst wird, wobei das Sprach- und/oder Musikmodul (220) aus einem Gehäuse (221) mit einer Stromquelle, bevorzugterweise einer Batterie (222), einem Lautsprecher (223) bzw. einer Aufnahme- und Wiedergabe mit einer Mikrofon-Lautsprecher-Einheit (224) und einem mechanischen oder vermittels einer licht-optischen Zelle (225) oder Sensor (225') gesteuerten Ein- und Ausschalter besteht, und mit einer Aufnahmeund Wiedergabeeinrichtung (250) für Sprache und/oder Musik versehen ist.

7. Elektrische Vorrichtung nach einem der Ansprüche 1 bis 5,
**dadurch gekennzeichnet,**
**dass** die Gehäuseabdeckplatte (111; 112) mit einer einzigen oder mit einer Anzahl von mit einer Stromzufuhr (258) verbundenen Leuchten oder Leuchtdioden (270) und mit einem mechanischen, licht-optisch- oder druckgesteuerten Ein- und Ausschalter (255) oder Sensor (255') versehen ist, wobei die Leuchten oder Leuchtdioden (270) über die Fläche der Gehäuseabdeckplatte (111; 112) verteilt an dieser oder auf dieser oder in Form eines umlaufenden, bevorzugterweise als Werbeträger ausgebildeten Lauflichtes (260) aus einer Anzahl von Leuchten oder Leuchtdioden (265) am Umfang der Gehäuseabdeckplatte (111; 112) oder ein laufender Lichtpfeil (280) angeordnet sind.

8. Elektrische Vorrichtung nach einem der Ansprüche 1 bis 5,
**dadurch gekennzeichnet,**
**dass** die Gehäuseabdeckplatte (111; 112) mit einem plattenförmigen oder folienförmigen Träger (210) mit einem programmierbaren, vorprogrammierten oder besprechbaren Sprach- und/oder Musikmodul (220) mit einer Stromquelle (222) und mit einem mechanischen, licht-optisch- oder druckgesteuerten Ein- und Ausschalter (225) oder Sensor (225') versehen ist, das mittels des Trägers (210) an der Wandfläche der Gehäuseabdeckplatte angeordnet oder in die Gehäuseabdeckplatte integriert ist, wobei die Anordnung des Sprach- und/oder Musikoduls (220) derart ist, dass über die mechanische, licht-optische- oder druckbeaufschlagte vermittels Betätigung, Bewegung oder Druck ausgelöste Steuerung die Inund Außerbetriebnahme des Sprach- und/ oder Musikmoduls (220) durch Wiedergabe der Sprach- und/ oder Musikaufzeichnung, beispeilsweise über einen Lautsprecher (230), ausgelöst wird, wobei das Sprach- und/oder Musikmodul (220) aus einem Gehäuse (221) mit einer Stromquelle, bevorzugterweise einer Batterie (222), einem Lautsprecher (223) bzw. einer Aufnahme- und Wiedergabe mit einer Mikrofon-Lautsprecher-Einheit (224) und einem mechanischen oder vermittels einer licht-optischen Zelle (225) oder Sensor (225') gesteuerten Ein- und Ausschalter besteht, und mit einer Aufnahme- und Wiedergabeeinrichtung (250) für Sprache und/oder Musik versehen ist, und daß die Gehäuseabdeckplatte des weiteren mit einer Anzahl von mit einer Stromzufuhr (258) verbundenen Leuchten oder Leuchtdioden (270) und mit einem mechanischen, licht-optisch- oder druckgesteuerten oder microcomputergesteuerter oder infrarotgesteuerter Ein- und Ausschalter (255) oder Sensor (255') versehen ist, wobei die Leuchten oder Leuchtdioden (270) über die Fläche der Gehäuseabdeckplatte (111; 112) verteilt an dieser oder auf dieser oder in Form eines umlaufenden bevorzugterweise als Werbeträger ausgebildeten Lauflichtes (260) aus einer Anzahl von Leuchten oder Leuchtdioden (265) am Umfang der Gehäuseabdeckplatte (111; 112) angeordnet sind.

9. Elektrische Vorrichtung nach einem der Ansprüche 6 bis 8,
**dadurch gekennzeichnet,**
**daß** mit dem Sprach- und/oder Musikmodul (220) ein Lautsprecher (230) verbunden ist, der in die Gehäuseabdeckplatte (111; 112) integriert ist.

10. Elektrische Vorrichtung nach einem der Ansprüche 7 bis 9,
**dadurch gekennzeichnet,**
**daß** die Leuchten und Leuchtdioden (270), der laufende Lichtpfeil (280) oder die Leuchten und Leuchtdioden (265) des umlaufenden Lauflichtes (260) weißes Licht oder Farblicht ausstrahlen.

11. Elektrische Vorrichtung nach einem der Ansprüche 7 bis 10,
**dadurch gekennzeichnet,**
**daß** auf der Gehäuseabdeckplatte (111; 112) Leuchtdioden in Form des Europäischen Symbols mit gelb-leuchtenden Sternen und blauleuchtenden Hintergrund angeordnet sind.

12. Elektrische Vorrichtung nach Anspruch 11,
**dadurch gekennzeichnet,**
**daß** jeder gelb-leuchtende Stern des Europäischen Symbols nach Art des Lichtpfeils (280) ausgebildet und um sich selbst drehend vermittels entsprechender Lauflichter ist.

13. Elektrische Vorrichtung nach einem der Ansprüche 1 bis 12,
**dadurch gekennzeichnet,**
**daß** zusätzlich ein Mikrokomputer (210) vorgesehen ist, in den das Sprach- und/oder Musikmodul (220) integriert ist und der mit dem Ein- und Ausschalter (225) sowie dem Sprach- und/oder Musikmodul (220) bzw. den Leuchten oder Leuchtdioden (270) verbunden ist und die Aktivierung des Sprach- und/oder Musikmoduls (220) bzw. der Leuchten oder Leuchtdioden (270) in Abhängigkeit von Eingangssignalen des Ein- und Ausschalters (225) steuert, wobei der Mikrocomputer (210) bevorzugterweise in dem Schalter bzw. in der Steckdose integriert ist.

14. Elektrische Vorrichtung nach Anspruch 6 bis 13,
**dadurch gekennzeichnet,**
**daß** der Mikrocomputer (210) eine Speicher für einen Sprachwortschatz für das Sprach- und/oder Musikmodul (220) bzw. für ein Leuchtmuster für die Leuchten oder Leuchtdioden (270) aufweist.

15. Elektrische Vorrichtung nach einem der Ansprüche 6 bis 14,
**dadurch gekennzeichnet,**
**daß** wenigstens ein Mikromotor (214) und wenigstens ein von diesem bewegbares Teil an dem Schalter bzw. an der Steckdose angeordnet ist, wobei der Mikromotor (214) mit dem Mikrocomputer (210) verbunden ist.

16. Elektrische Vorrichtung nach einem der Ansprüche 1 bis 15,
**dadurch gekennzeichnet,**
**daß** die Gehäuseabdeckplatte (320) des Schalters (110) oder der Steckdose (120) mit einem Thermometer (340) versehen ist.

## Claims

1. Electric device such as switch, outlet or the like in single or multiple design for fitting in flush boxes or in surface sockets with a housing receiving the electrical components which is provided with a covering plate (111, 112) or in a housing in standard design, whereby the covering plate (111, 112) is provided with or without a peripheral edge (111a, 112a) and has a configuration in form of a motive,
**characterized in**
**that** the switch (110), the outlet (120) or their housing covering plates (320) have, for a low wall thickness, a bidimensional or three-dimensional and plastic or another geometrical and structural configuration or conformation in form of a motive, a logo or a numeral (115) and/or a figurative configuration or conformation (315) such as a flower, the shape of an animal, of a heart, of a face or of a personality, whereby the structural configuration or conformation (315) has, for increasing the inherent stability, different surface profiles (316) with elevated profile sections (316a) and recessed profile sections (316b) and profile webs (316c) so that the different profile sections (316a, 316b, 316c) complement each other to a thin-wall moulded body with a motive-type stabilizing structure and whereby the peripheral edge (311) of the switch (110) or of the outlet (120) or of the housing covering plates (320) is configured as wall reinforcing profiled bodies without motive or in the manner of a motive and that the figurative structural form configuration of the moulded bodies (315) is a fixedly or removably integrated component of the switch (110) and/or of the outlet (120) or of their housing covering plates, whereby for the removable embodiment the structural form configuration (315) or a corresponding moulded body is pushed-on, pushed-over, sticked-on or jammed-on onto the outlet (120) and/or the switch (110).

2. Electric device according to claim 1,
**characterized in**
**that** the peripheral edge (111a, 112a) of the housing covering plate (111; 112) is configured as an advertising surface and/or switch/outlet.

3. Electric device according to any of the claims 1 and 2,
**characterized in**
**that** the housing covering plate (111; 112), the switch (110) or the outlet housing is made of wood, metal, glass, cloth, plush or plastics or another material or are provided with a coat (118) made of a textile cut.

4. Electric device according to any of the claims 1 to 3,
**characterized in**
**that** the housing covering plate (111; 112), the switch (110) or the outlet housing is coloured.

5. Electric device according to any of the claims 1 to 3,
**characterized in**
**that** the housing covering plate (111; 112) and/or the housing (130) of the electric device (100) as a surface element has a plastic configuration, for example with the shape of an animal.

6. Electric device according to any of the claims 1 to 5,
**characterized in**
**that** the housing covering plate (111; 112) is provided with a plate-shaped or foil-shaped carrier (210) with a programmable, preprogrammed or recordable speech and/or music module (220) with a source of current (222) and with a mechanical, optical or pressure controlled on-off switch (225) or detector (225') which is placed by means of the carrier (210) on the wall surface of the housing covering plate or which is integrated into the housing covering plate, whereby the placement of the speech and/or music module (220) is such that over the mechanical, optical or pressure-controlled control triggered by actuation, movement or pressure the putting in service and out of service of the speech and/or music module (220) is triggered by the reproduction of the speech and/or music recording, for example over a loudspeaker (230), whereby the speech and/or music nodule (220) consists in a housing (221) with a source of current, preferably a battery (222), a loudspeaker (223) or a recording and reproducing device with a microphone/loudspeaker unit (224) and a mechanical on-off switch or controlled by an optical cell (225) or a detector (225') and with a recording and reproducing device (250) for speech and/or music.

7. Electric device according to any of the claims 1 to 5,
**characterized in**
**that** the housing covering plate (111; 112) is provided with a single or with a number of lamps or light-emitting diodes (270) connected with a current supply (258) and with a mechanical, optical or pressure-controlled on-off switch (255) or detector (255'), whereby the lamps or light-emitting diodes (270) are placed over the surface of the housing covering plate (111; 112) distributed against this or on this covering plate or in form of a circulating run light (260) preferably configured as an advertising carrier made of a number of lamps or light-emitting diodes (265) at the periphery of the housing covering plate (111; 112) or a continuous light arrow (280).

8. Electric device according to any of the claims 1 to 5,
**characterized in**
**that** the housing covering plate (111; 112) is provided with a plate-shaped or foil-shaped carrier (210) with a programmable, preprogrammed or recordable speech and/or music module (220) with a source of current (222) and with a mechanical, optical or pressure controlled on-off switch (225) or detector (225') which is placed by means of the carrier (210) on the wall surface of the housing covering plate or which is integrated into the housing covering plate, whereby the placement of the speech and/or music module (220) is such that over the mechanical, optical or pressure-controlled control triggered by actuation, movement or pressure the putting in service and out of service of the speech and/or music module (220) is triggered by the reproduction of the speech and/or music recording, for example over a loudspeaker (230), whereby the speech and/or music module (220) consists in a housing (221) with a source of current, preferably a battery (222), a loudspeaker (223) or a recording and reproducing device with a microphone/loudspeaker unit (224) and a mechanical on-off switch or controlled by an optical cell (225) or a detector (225') and with a recording and reproducing device (250) for speech and/or music and that the housing covering plate furthermore is provided with a number of lamps or light-emitting diodes (270) connected with a current supply (258) and with a mechanical, optical or pressure-controlled or microcomputer-controlled or infrared-controlled on-off switch (255) or detector (255'), whereby the lamps or light-emitting diodes (270) are placed over the surface of the housing covering plate (111; 112) distributed against this or on this covering plate or in form of a circulating run light (260) preferably configured as an advertising carrier made of a number of lamps or light-emitting diodes (265) at the periphery of the housing covering plate (111; 112) or a continuous light arrow (280).

9. Electric device according to any of the claims 6 to 8,
**characterized in**
**that** a loudspeaker (230), which is integrated into the housing covering plate (111; 112) is connected with the speech and/or music module (220).

10. Electric device according to any of the claims 7 to 9,
**characterized in**
**that** the lamps and light-emitting diodes (270), the circulating light arrow (280) or the lamps and light-emitting diodes (265) of the circulating run light (260) emit white light or colour light.

11. Electric device according to any of the claims 7 to 10,
**characterized in**
**that** light-emitting diodes in form of the european symbol with yellow lighting stars and blue lighting background are placed on the housing covering plate (111; 112).

12. Electric device according to claim 11,
**characterized in**
**that** each yellow lighting star of the european symbol is configured like a light arrow (280) and rotating around itself by means of corresponding run lights.

13. Electric device according to any of the claims 1 to 12,
**characterized in**
**that** additionally a microcomputer (210) is provided into which the speech and/or music module (220) is integrated and which is connected with the on-off switch (225) as well as the speech and/or music module (220) or the lamps or light-emitting diodes (270) and controls the activation of the speech and/or music module (220) or of the lamps or light-emitting diodes (270) depending on input signals of the on-off switch (225), whereby the microcomputer (210) is preferably integrated in the switch or in the outlet.

14. Electric device according to claim 6 to 13,
**characterized in**
**that** the microcomputer (210) has a memory for a vocabulary for the speech and/or music module (220) or for a light pattern for the lamps or light-emitting diodes (270).

15. Electric device according to any of the claims 6 to 14,
**characterized in**
**that** at least one micromotor (214) and at least one part movable by this motor is placed on the switch or on the outlet, whereby the micromotor (214) is connected with the microcomputer (210).

16. Electric device according to any of the claims 1 to 15,
**characterized in**
**that** the housing covering plate (320) of the switch (110) or of the outlet (120) is provided with a thermometer (340).

## Revendications

1. Appareil électrique tel que prise ou interrupteur ou équivalent en modèle simple ou multiple pour encastrement dans des prises de courant encastrées ou apparentes avec un boîtier qui loge les composants électriques et qui est pourvu d'une plaque de recouvrement (111, 112) ou dans un boîtier en modèle standard, la plaque de recouvrement (111, 112) étant pourvue d'un bord périphérique (111a, 112a) ou en étant dépourvue et présentant une configuration en forme de motif,
**caractérisé en ce**
**que** l'interrupteur (110), la prise (120) ou leurs plaques de recouvrement de boîtier (320) présentent, pour une faible épaisseur de paroi, une configuration ou une conformation bidimensionnelle ou tridimensionnelle et plastique ou une autre configuration ou conformation géométrique et structurelle en forme de motif, de logo ou de chiffre (115) et/ou une configuration ou conformation figurative (315) comme une fleur, une forme d'animal, une forme de coeur, la forme d'un visage ou d'une personnalité, la configuration ou conformation structurelle présentant, pour augmenter la stabilité inhérente, différents profilages de surface (316) avec des sections de profil en relief (316a) et des sections de profil en creux (316b) et des traverses de profil (316c) si bien que les différentes sections de profil (316a, 316b, 316c) se complètent en un corps moulé à parois minces avec une structure stabilisante de type motif et le bord périphérique (311) de l'interrupteur (110) ou de la prise (120) ou des plaques de recouvrement de boîtier (320) étant configuré comme des corps profilés renforçant la paroi (330) sans motif ou de type motif et que la conformation structurelle figurative des corps moulés (315) est une partie de l'interrupteur (110) et/ou de la prise (120) ou de leurs plaques de recouvrement de boîtier qui est intégrée de manière fixe ou amovible, cependant que, pour la forme de réalisation amovible, la conformation structurelle (315) ou un corps moulé correspondant est emboîté, enfilé, collé ou coïncé sur la prise (120) et/ou l'interrupteur (110).

2. Appareil électrique selon la revendication 1,
**caractérisé en ce**
**que** le bord périphérique (111a, 112a) de la plaque de recouvrement de boîtier (111; 112) est configuré comme une surface publicitaire et/ou interrupteur/prise.

3. Appareil électrique selon l'une des revendications 1 et 2,
**caractérisé en ce**
**que** la plaque de recouvrement du boîtier (111; 112), l'interrupteur (110) ou le boîtier de la prise est en bois, métal, tissu, peluche ou plastique ou en une autre matière ou est recouverte avec un revêtement (118) en une pièce découpée de tissu.

4. Appareil électrique selon l'une des revendications 1 à 3,
**caractérisé en ce**
**que** la plaque de recouvrement du boîtier (111; 112), l'interrupteur (110) ou le boîtier de la prise est configuré en couleur.

5. Appareil électrique selon l'une des revendicaions 1 à 4,
**caractérisé en ce**
**que** la plaque de recouvrement du boîtier (111; 112) et/ou le boîtier (130) de l'appareil électrique (100) comme élément apparent présente une configuration plastique, par exemple en forme d'animal.

6. Appareil électrique selon l'une des revendications 1 à 5,
**caractérisé en ce**
**que** la plaque de recouvrement de boîtier (111; 112) est pourvue d'un support en forme de plaque ou de feuille (210) avec un module vocal et/ou musical programmable, préprogrammé ou qui peut être parlé (220) avec une source de courant (222) et avec un interrupteur marche/arrêt (225) ou par un capteur (225') mécanique, commandé de manière optique ou par pression qui est placé au moyen du support (210) sur la surface de la paroi de la plaque de recouvrement du boîtier ou qui est intégré dans la plaque de recouvrement du boîtier, la disposition du module vocal et/ou musical (220) étant telle que par la commande mécanique, optique ou par pression déclenchée par l'actionnement, le mouvement ou la pression, la mise en service et la mise hors service du module vocal et/ou musical (220) est déclenchée par la reproduction de l'enregistrement vocal et/ou musical, par exemple par un haut-parleur (230), le module vocal et/ou musical (220) étant constitué par un boîtier (221) avec une source de courant, de préférence une pile (222), un haut-parleur (223) ou un dispositif d'enregistrement et de reproduction avec une unité de microphone/haut-parleur (224) et un interrupteur marche/arrêt mécanique ou commandé au moyen d'une cellule optique (225) ou d'un capteur (225') et étant pourvu d'un dispositif d'enregistrement et de reproduction (250) pour le langage et/ou la musique.

7. Appareil électrique selon l'une des revendications 1 à 5,
**caractérisé en ce**
**que** la plaque de recouvrement du boîtier (111; 112) est pourvue d'une seule ou d'un certain nombre de lampes ou de diodes électroluminescentes (270) reliées à une alimentation de courant (258) et d'un interrupteur marche/arrêt (255) ou d'un capteur (255') mécanique, optique ou commandé par pression, les lampes ou les diodes électroluminescentes (270) étant placées en étant réparties sur la surface de la plaque de recouvrement du boîtier (111; 112) contre celle-ci ou sur celle-ci ou en forme de lumière de marche (260) tout autour, configurée de préférence comme support publicitaire, constituée par un certain nombre de lampes ou de diodes électroluminescentes (265) sur le périmètre de la plaque de recouvrement du boîtier (111; 112) ou une flèche de lumière continue (280).

8. Appareil électrique selon l'une des revendications 1 à 5,
**caractérisé en ce**
**que** la plaque de recouvrement de boîtier (111; 112) est pourvue d'un support en forme de plaque ou de feuille (210) avec un module vocal et/ou musical programmable, préprogrammé ou qui peut être parlé (220) avec une source de courant (222) et avec un interrupteur marche/arrêt (225) ou un capteur (225') mécanique, commandé de manière optique ou par pression qui est placé au moyen du support (210) sur la surface de la paroi de la plaque de recouvrement du boîtier ou qui est intégré dans la plaque de recouvrement du boîtier, la disposition du module vocal et/ou musical (220) étant telle que, par la commande mécanique, optique ou par pression déclenchée par l'actionnement, le mouvement ou la pression, la mise en service et la mise hors service du module vocal et/ou musical (220) est déclenchée par la reproduction de l'enregistrement vocal et/ou musical, par exemple par un haut-parleur (230), le module vocal et/ou musical (220) étant constitué par un boîtier (221) avec une source de courant, de préférence une pile (222), un haut-parleur (223) ou un dispositif d'enregistrement et de reproduction avec une unité de microphone/haut-parleur (224) et un interrupteur marche/arrêt mécanique ou commandé au moyen d'une cellule optique (225) ou d'un capteur (225') et étant pourvu d'un dispositif d'enregistrement et de reproduction (250) pour le langage et/ou la musique et que la plaque de recouvrement du boîtier est, de plus, pourvue d'un certain nombre de lampes ou de diodes électroluminescentes (270) reliées à une alimentation en courant (258) et d'un interrupteur marche/arrêt (255) ou d'un capteur (255') mécanique, optique ou commandé par pression ou par un micro-ordinateur ou par infrarouge, les lampes ou les diodes électroluminescentes (270) étant placées en étant réparties sur la surface de la plaque de recouvrement du boîtier (111; 112) contre celle-ci ou sur celle-ci ou en forme de lumière de marche (260) tout le tour, configurée de préférence comme support publicitaire, constituée par un certain nombre de lampes ou de diodes électroluminescentes (265) sur le périmètre de la plaque de recouvrement du boîtier (111; 112).

9. Appareil électrique selon l'une des revendications 6 à 8,
**caractérisé en ce**
**qu'**un haut-parleur (230), qui est intégré dans la plaque de recouvrement du boîtier (111; 112), est relié au module vocal et/ou musical (220).

10. Appareil électrique selon l'une des revendications 7 à 9,
**caractérisé en ce**
**que** les lampes et les diodes électroluminescentes (270), la flèche de lumière continue (280) ou les lampes et diodes électroluminescentes (265) de la lumière de marche tout autour émettent de la lumière blanche ou de la lumière de couleur.

11. Appareil électrique selon l'une des revendications 7 à 10,
**caractérisé en ce**
**que** des diodes électroluminescentes en forme de symbole européen avec des étoiles qui éclairent en jaune et un fond qui éclaire en bleu sont placées sur la plaque de recouvrement du boîtier (111; 112).

12. Appareil électrique selon la revendication 11,
**caractérisé en ce**
**que** chaque étoile du symbole européen qui éclaire en jaune est configurée de type flèche de lumière (280) et rotative autour d'elle-même au moyen de lumières de marche correspondantes.

13. Appareil électrique selon l'une des revendications 1 à 12,
**caractérisé en ce**
**qu'**en plus un micro-ordinateur (210) est prévu dans lequel le module vocal et/ou musical (220) est intégré et qui est relié à l'interrupteur marche/arrêt (225) ainsi qu'au module vocal et/ou musical (220) et aux lampes ou aux diodes électroluminescentes (270) et commande l'activation du module vocal et/ou musical (220) et/ou des lampes ou diodes électroluminescentes (270) en fonction de signaux d'entrée de l'interrupteur marche/arrêt (225), le micro-ordinateur (210) étant de préférence intégré à l'interrupteur et/ou à la prise.

14. Appareil électrique selon la revendication 6 à 13,
**caractérisé en ce**
**que** le micro-ordinateur (210) présente une mémoire pour un vocabulaire pour le module vocal et/ou musical (220) ou pour un dessin lumineux pour les lampes ou les diodes électroluminescentes (270).

15. Appareil électrique selon l'une des revendications 6 à 14,
**caractérisé en ce**
**qu'**au moins un micromoteur (214) et au moins une partie pouvant être déplacée par celui-ci est placée sur l'interrupteur ou sur la prise, le micromoteur (214) étant relié au micro-ordinateur (210).

16. Appareil électrique selon l'une des revendications 1 à 15,
**caractérisé en ce**
**que** la plaque de recouvrement du boîtier (320) de l'interrupteur (110) ou de la prise (120) est pourvue d'un thermomètre (340).
